# EUROPEAN PATENT APPLICATION

(11) **EP 4 554 205 A1**
(43) Date of publication of application: **14.05.2025**
(21) Application number: 23852724.6
(22) Date of filing: 22.06.2023
(51) Int. Cl.: H04N 13/271, H04N 13/239, H04N 13/133, H04N 23/71, H04N 23/73, H04N 23/741, G06T 7/20

(54) **ELECTRONIC DEVICE AND METHOD FOR ACQUIRING DEPTH MAP**

(30) Priority: 09.08.2022 KR 20220099079
(71) Applicant: Samsung Electronics Co., Ltd., Suwon-si, Gyeonggi-do 16677 (KR)
(72) Inventor: HYUN, Jongmin, Suwon-si Gyeonggi-do 16677 (KR); LEE, Seunghan, Suwon-si Gyeonggi-do 16677 (KR); CHUN, Jonghyeok, Suwon-si Gyeonggi-do 16677 (KR); CHOI, Cheolhee, Suwon-si Gyeonggi-do 16677 (KR); HYUN, Daeyoung, Suwon-si Gyeonggi-do 16677 (KR)
(74) Representative: HGF
(86) International application number: PCT/KR2023/008716
(87) International publication number: WO 2024/034837

(57) **Abstract**

In embodiments, the electronic device can acquire first image information about a frame by using a first camera from among a plurality of cameras, acquire second image information about the frame by using a second camera from among the plurality of cameras, determine a depth map calculation method on the basis of at least one matching condition related to at least one from among the difference between the first image information and the second image information, the brightness value of the frame, or an object detected from the frame, acquire depth map information on the basis of at least one camera identified according to the depth map calculation method, and display, through a display, an image in which designated processing has been applied to a background area on the basis of the depth map information.

## Description

### [Technical Field]

The disclosure relates to an electronic device and a method for obtaining a depth map.

### [Background Art]

The electronic device may cause a foreground and a background to be separated from each other to provide a variety of visual effects (e.g., zooming, spinning, panning) to the background of a photographed image. The electronic device may obtain a depth map indicating distance information to separate the background within the image. The electronic device may obtain the depth map using a plurality of cameras.

The above information is presented as background information only to assist with an understanding of the disclosure. No determination has been made, and no assertion is made, as to whether any of the above might be applicable as prior art with regard to the disclosure.

### [Detailed Description of the Invention]

### [Technical Solution]

In embodiments, an electronic device may include at least one sensor, a plurality of cameras, a display, a memory configured to store instructions, and at least one processor operatively coupled to the at least one sensor, the plurality of cameras, the display, and the memory. The at least one processor may perform designated operations according to execution of the instructions. The at least one processor may be configured to obtain first image information on a frame, using a first camera among the plurality of cameras. The at least one processor may be configured to obtain second image information on the frame, using a second camera among the plurality of cameras. The at least one processor may be configured to determine a depth map calculation scheme, based on at least one matching condition, related to at least one of a difference between the first image information and the second image information, a brightness value of the frame, or an object detected from the frame. The at least one processor may be configured to obtain depth map information, based on at least one camera identified according to the depth map calculation scheme. The at least one processor may be configured to display an image in which a designated processing is applied to a background area based on the depth map information, through the display. In the at least one processor, the depth map calculation scheme may be determined based at least in part on a first scheme for determining a depth map through the plurality of cameras and a second scheme for determining the depth map through a single camera among the plurality of cameras.

In embodiments, a method performed by an electronic device may include obtaining first image information for a frame, using a first camera among a plurality of cameras. The method may include obtaining second image information for the frame, using a second camera among the plurality of cameras. The method may include determining a depth map calculation scheme, based on at least one matching condition, related to at least one of a difference between the first image information and the second image information, a brightness value of the frame, or an object detected from the frame. The method may include obtaining depth map information for the frame, based on at least one camera identified according to the depth map calculation scheme. The method may include displaying, through a display, an image in which a designated processing is applied to a background area based on the depth map information. The depth map calculation scheme may be determined based at least in part on a first scheme for determining a depth map through the plurality of cameras and a second scheme for determining the depth map through a single camera among the plurality of cameras.

In embodiments, an electronic device may include at least one sensor, a plurality of cameras, a display, a memory configured to store instructions, and at least one processor operatively coupled to the at least one sensor, the plurality of cameras, the display, and the memory. The at least one processor may perform designated operations according to execution of the instructions. The at least one processor may be configured to, when a brightness value detected by the at least one sensor is less than a threshold value or a distance value to an object detected by the at least one sensor is less than a reference value, identify, from among a first scheme for determining a depth map through the plurality of cameras and a second scheme for determining the depth map through a single camera among the plurality of cameras, the second scheme. The at least one processor may be configured to identify the single camera among the plurality of cameras, based on either the brightness value or the distance value. The at least one processor may be configured to obtain image information through the single camera. The at least one processor may be configured to obtain depth map information through the single camera. The at least one processor may be configured to display an image in which a designated processing is applied to a background area based on the image information and the depth map information, through the display.

In embodiments, a method performed by an electronic device may include, when a brightness value detected by at least one sensor is less than a threshold value or a distance value to an object detected by the at least one sensor is less than a reference value, identifying, from among a first scheme for determining a depth map through the plurality of cameras and a second scheme for determining the depth map through a single camera among the plurality of cameras, the second scheme. The method may include identifying the single camera among the plurality of cameras, based on either the brightness value or the distance value. The method may include obtaining image information through the single camera. The method may include obtaining depth map information through the single camera. The method may include displaying an image in which a designated processing is applied to a background area based on the image information and the depth map information, through a display.

### [Brief Description of the Drawings]

FIG. 1 is a block diagram of an electronic device in a network environment according to an embodiment.
FIG. 2 illustrates an example of a functional configuration of an electronic device according to an embodiment.
FIG. 3A illustrates an operation flow of an electronic device for obtaining depth map information based on a matching condition, according to an embodiment.
FIG. 3B illustrates an operation flow of an electronic device for obtaining depth map information through a camera set based on a matching condition, according to an embodiment.
FIG. 4A illustrates an operation flow of an electronic device for selecting a depth map calculation scheme according to a brightness value, according to an embodiment.
FIG. 4B illustrates an example of selecting a depth map calculation scheme according to a brightness value, according to an embodiment.
FIG. 5A illustrates an operation flow of an electronic device for selecting a depth map calculation scheme according to a distance value, according to an embodiment.
FIG. 5B illustrates an example of selecting a depth map calculation scheme according to a distance value, according to an embodiment.
FIG. 6A illustrates an operation flow of an electronic device for selecting a depth map calculation scheme according to an object type, according to an embodiment.
FIG. 6B illustrates an example of selecting a depth map calculation scheme according to an object type, according to an embodiment.
FIG. 7 illustrates an example of selection of a depth map calculation scheme for each region, according to an embodiment.
FIG. 8A illustrates an example of image processing using a depth map at a close distance, according to an embodiment.
FIG. 8B illustrates an example of image processing using a depth map in low illuminance, according to an embodiment.
FIG. 9 illustrates an operation flow of an electronic device for determining a depth map calculation scheme according to a feature of an area, according to an embodiment.
FIG. 10 illustrates an operation flow of an electronic device for determining a depth map calculation scheme based on a difference in image information between cameras, according to an embodiment.
FIG. 11 illustrates an operation flow of an electronic device for obtaining a depth map through camera switching, according to an embodiment.

### [Mode for Carrying out the Invention]

The terms used in the disclosure are merely used to better describe a certain embodiment and may not be intended to limit the scope of other embodiments. A singular expression may include a plural expression, unless the context explicitly dictates otherwise. The terms used herein, including technical and scientific terms, may have the same meanings as those commonly understood by those skilled in the art to which the disclosure pertains. Terms defined in a general dictionary among the terms used in the disclosure may be interpreted as having the same or similar meaning as those in the context of the related art, and they are not to be construed in an ideal or overly formal sense, unless explicitly defined in the disclosure. In some cases, even the terms defined in the disclosure may not be interpreted to exclude embodiments of the disclosure.

In various examples of the disclosure described below, a hardware approach will be described as an example. However, since various embodiments of the disclosure may include a technology that utilizes both the hardware-based approach and the software-based approach, the various embodiments are not intended to exclude the software-based approach.

As used in the following description, terms referring to a signal (e.g., a signal, a transmission signal, a reception signal, a forward signal, a backward signal, a coupling signal, a synthesized signal, a digital signal, an analog signal, a modulated signal, etc.), terms referring to a time resource (e.g., a symbol, a slot, a subframe, a radio frame, etc.), terms for an operation state (e.g., a step, an operation, a procedure, etc.), a term referring to a channel, a term referring to network objects, a term referring to a component of a device, and so on are only exemplified for convenience of description. Therefore, the disclosure is not limited to those terms described below, and other terms having the same or equivalent technical meaning may be used therefor.

As used in the following description, terms referring to parts of an electronic device (e.g., a module, an antenna, an antenna element, a circuit, a processor, a chip, a component, a device, etc.), terms referring to a circuit or a component of a circuit, and the like are only exemplified for convenience of explanation. Therefore, the disclosure is not limited to those terms described below, and other terms having the same or equivalent technical meaning may be used therefor. Further, as used herein, the terms such as e.g., "~ portion', '~ part', '~ unit', '~ module', '~ body', or the like may refer to at least one shape of structure or a unit for processing a certain function.

Further, throughout the disclosure, an expression, such as e.g., 'above (more than)' or 'below (less than)' may be used to determine whether a specific condition is satisfied or fulfilled, but it is merely of a description for expressing an example and is not intended to exclude the meaning of 'more than or equal to' or 'less than or equal to'. A condition described as 'more than or equal to' may be replaced with an expression, such as 'above', a condition described as 'less than or equal to' may be replaced with an expression, such as 'below', and a condition described as 'more than or equal to and below' may be replaced with 'above and less than or equal to', respectively. Furthermore, hereinafter, 'A' to 'B' means at least one of the elements from A (including A) to B (including B). Hereinafter, 'C' and/or 'D' means including at least one of 'C' or 'D', that is, {'C', 'D', or 'C' and 'D'}.

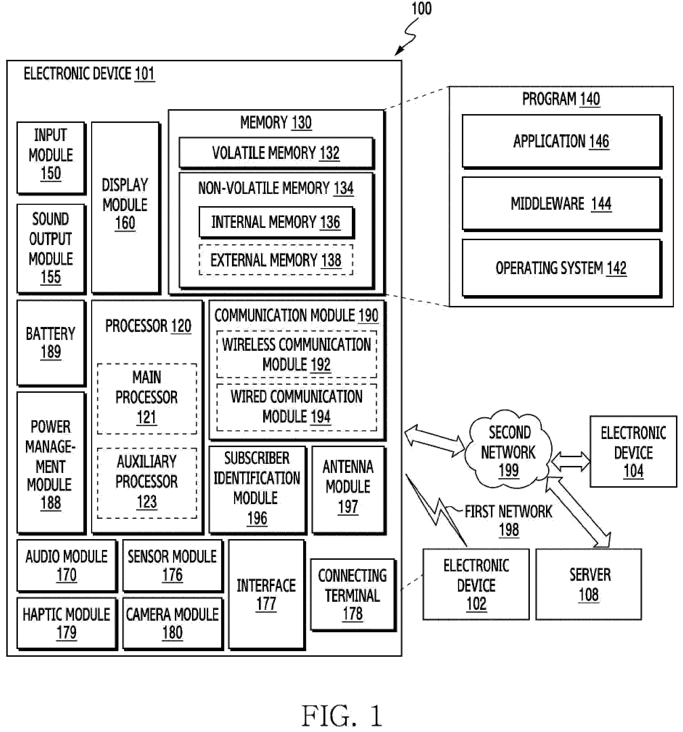

FIG. 1 is a block diagram of an electronic device in a network environment according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In an embodiment, at least one of the components (e.g., the connecting terminal 178) may be omitted from the electronic device 101, or one or more other components may be added in the electronic device 101. In an embodiment, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may, for example, control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., the electronic device 102)(e.g., speaker or headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

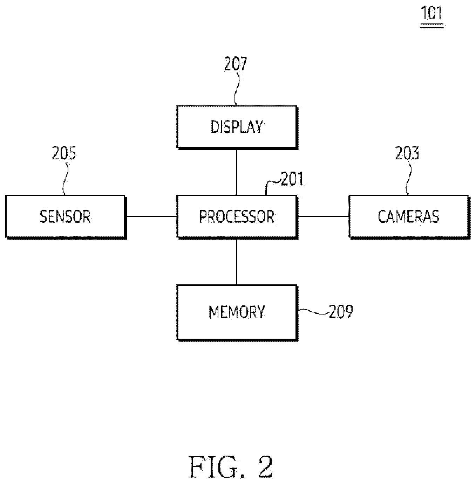

FIG. 2 illustrates an example of a functional configuration of an electronic device according to embodiments.

Referring to FIG. 2, an electronic device (e.g., the electronic device 101 of FIG. 1) may include a processor 201 (e.g., the processor 120 of FIG. 1), cameras 203 (e.g., the camera module 180), a sensor 205 (e.g., the sensor module 176), a display 207 (e.g., the display module 160), and a memory 209 (e.g., the memory 130).

The electronic device 101 may include the processor 201. The processor 201 may be implemented with one or more integrated circuit (IC) chips to execute various data processing. For example, the processor 201 may be implemented as a system on chip (SoC). The processor 201 may include sub-components including, for example, a central processing unit (CPU), a graphics processing unit (GPU), a neural processing unit (NPU), an image signal processor (ISP), a display controller, a memory controller, a storage controller, an application processor (AP), a communication processor (CP), and/or a sensor interface. These sub-components are merely of examples. For example, the processor 201 may further include other sub-components. For example, some sub-components may be omitted from the processor 201.

The electronic device 101 may include the cameras 203. For example, the cameras may include at least one of a wide-angle camera, an ultra-wide-angle camera, a first telephoto camera, and a second telephoto camera. The wide-angle camera may be used to obtain an image of an object positioned at a predetermined distance (e.g., about 28 cm (centimeter)) or more from the electronic device 101, at a low magnification (e.g., less than about 3-magnification). The ultra-wide-angle camera may be used to obtain an image of an object positioned at less than the predetermined distance from the electronic device 101 at a low magnification. The first telephoto camera may be used to obtain an image of an object in a first magnification range (e.g., greater than or equal to 3-magnification and less than 10-magnification). The second telephoto camera may be used to obtain an image of an object in a second magnification range (e.g., greater than or equal to 10-magnification and less than 15-magnification). According to an embodiment, the electronic device 101 may capture an image through each of at least two cameras among the cameras 203 and combine the captured images to obtain a depth map. Further, according to an embodiment, the electronic device 101 may capture an image through one camera among cameras 203 and learn the captured images to obtain a depth map. Hereinafter, throughout the disclosure, an image indicating a depth of a subject or background is referred to as a depth map, but it will be apparent that various terms (e.g., depth picture, depth image, depth information) may be used in addition to the depth map.

Hereinafter, while embodiments of the disclosure are described using cameras or the terms of those cameras, but the embodiments of the disclosure are not to be construed as limited to the above-described terms. According to an embodiment, the electronic device 101 may use at least one of a plurality of lenses included in one camera module to obtain a depth map. According to an embodiment, the electronic device 101 may include an image signal processor (ISP) for image signal processing of a camera. The ISP may be electrically and/or operatively connected to a plurality of lenses. Further, the ISP may be electrically and/or operatively connected to one or more image sensors. For example, the electronic device 101 may control one camera module to obtain a depth map based on a plurality of settings or a single setting.

The electronic device 101 may include the sensor 205. According to an embodiment, the sensor 205 may include a distance detection sensor. For example, the sensor 205 may include a time of flight (TOF) sensor. The sensor 205 may include a sensor to measure an ambient distance, and may output the distance by emitting infrared (IR) and calculating a time duration that the light returns. Further, according to an embodiment, the sensor 205 may include an illuminance sensor. The illuminance sensor may measure an external illuminance. The illuminance sensor may obtain an external brightness value through a light receiving part. The illuminance sensor may obtain the external brightness value for a designated exposure time. The illuminance sensor may transmit the obtained brightness value to the processor 201.

The electronic device 101 may include the display 207. The display 207 may visually provide information to a user. The display 207 may display an image processed by the processor 201 under the control of the processor 201. According to an embodiment, the display 207 may display an image obtained through at least one of the cameras 203. The display 207 may display an image with an effect according to the depth map processed.

The electronic device 101 may include the memory 209. The memory 209 may store data such as e.g., a basic program, an application program, and setting information for the operation of the electronic device 101. The memory 209 may be referred to as a storage unit. The memory 209 may include a volatile memory (e.g., the volatile memory 132), a non-volatile memory (e.g., the nonvolatile memory 134), or a combination of the volatile memory and the nonvolatile memory. In addition, the memory 209 may provide stored data according to a request from the processor 201. According to an embodiment, the memory 209 may store depth map information according to an embodiment. Further, according to an embodiment, the memory 209 may store at least one parameter (e.g., a weight) for depth map calculation according to an embodiment. Further, according to an embodiment, the memory 209 may store images captured by at least one camera (e.g., at least one of the cameras 203) for processing by the processor 201. Furthermore, according to an embodiment, the memory 209 may store data for learning artificial intelligence (AI) of a camera (e.g., one of the cameras 203).

The electronic device 101 may obtain an image through at least one camera. The electronic device 101 may obtain a depth map indicating distance information (either an absolute distance or a relative distance). The electronic device 101 may separate the foreground and the background of the image based on the depth map. The electronic device 101 may provide the background with a blur effect (e.g., Baukeh effect) or various other effects (e.g., a mono effect or an effect of replacing the background, such as another color or zooming, spin, or panning effect). With such an effect, emphasis made be made of a main subject of the obtained image. Meanwhile, when the depth map is not accurate, a specific area other than the background may be blurred. Further, on the contrary, other background area may be clearly displayed without blurring.

The above-described background effect may be processed using a single camera or two or more cameras. For example, the electronic device 101 may apply the Bokeh effect (hereinafter, referred to as 'single Bokeh effect') to a background split using the segmentation technology of the foreground (e.g., an area including a main subject) and the background in an image obtained through one camera. Recently, with the development of AI technology, it is possible to extract a depth map containing various distance information rather than a simple segmentation of the foreground and the background from one image. Further, for example, the electronic device 101 may obtain a depth map through images obtained in one frame (e.g., simultaneously) from two or more cameras. The electronic device 101 may divide the foreground and the background through the depth map and apply the Bokeh effect (hereinafter, referred to as a double Bokeh effect or a multi Bokeh effect) to the background. Furthermore, the electronic device 101 may obtain depth information using a separate means to obtain depth information (for example, a time of light (TOF) sensor, a structural light field, a 3D image sensor, an array camera, or the like). The electronic device 101 may divide the foreground and the background of the image through the obtained depth information. The electronic device 101 may apply a blur effect to the background of the image.

Acquiring depth information through a depth map using two or more cameras or a separate means generally provides more accurate results than a result processed by one camera. However, in the case of a depth map extracted and calculated from images obtained from two or more cameras described above, there may be a possibility that errors may occur due to image deviations (e.g., the lens characteristics such as brightness, noise, sharpness, and distortion) between the obtained images. Moreover, depth map errors may occur in texture-less, reflective, saturated, and transparent subjects where the feature matching is difficult. Further, lots of depth map errors may also occur at a proximity distance where large parallax differences between cameras are introduced, and in extreme low luminance environment where the differences in physical characteristics between cameras (e.g., lenses, sensor performance) are maximized.

Such depth map errors eventually lead to incorrect results in separating the foreground and the background. For example, it may cause a problem with the quality of blur effects or other alternative effects (e.g., zooming, spin, panning) to be applied to the background. Therefore, in a situation where the quality difference between the cameras is high, the electronic device 101 may improve the errors with a scheme of learning an image extracted from a single camera to extract a depth map (hereinafter, referred to as 'single camera depth map extraction method'). Embodiments of the disclosure aim to provide an optimal result for image processing, by obtaining a depth map with the single AI camera depth map extraction method, in the situation of a relative distance error that may occur due to various causes of errors and physical limitations as described above. Thus, errors in the depth map may be reduced by applying the single AI camera depth map extraction method together with a depth map calculation scheme using a plurality of cameras.

In order to perform operations to be described later according to embodiments, the processor 201 of the electronic device 101 may include various components. For example, the components included in the processor 201 may be included in the form of hardware and/or software. For example, at least some of the components may include software including at least one instruction executed in the processor 201. In such a case, an operation of the component may be understood as an operation of the processor 201.

The processor 201 may include an image distance determination unit. The processor 201 may measure a distance from an object in an image. For example, the processor 201 may measure the distance through the sensor 205. Further, for example, the processor 201 may measure the distance through at least one of the cameras 203. Further, for example, the processor 201 may measure the distance through a separate means (e.g., an array camera, a 3D image sensor, or a structured light field camera) for obtaining the distance information. Further, for example, the processor 201 may perform deep learning through at least one of various methods or a combination of at least two of them. The processor 201 may obtain the distance according to a result of the deep learning. Further, for example, the processor 201 may obtain the distance through an auto-focus value according to auto-focusing.

The processor 201 may include an image illuminance determination unit. The processor 201 may measure illuminance. For example, the processor 201 may measure a brightness value of surroundings through the sensor 205. Further, for example, the processor 201 may measure light through a single camera or a plurality of cameras. Further, for example, the processor 201 may analyze a pixel value of an input image to obtain a brightness value.

The processor 201 may include an image scene analysis unit. The processor 201 may perform deep learning on an image. The processor 201 may perform scene analysis according to deep learning, based on previously stored images and current images. According to an embodiment, the processor 201 may calculate an occlusion generated area based on image information obtained through a plurality of cameras. The term 'occlusion' refers to a phenomenon in which due to an object placed at a specific location, an area behind the object is not detected from a viewpoint of the camera. Due to the object, a blind spot may occur in an image. The occlusion generated area in the image obtained through a first camera may be referred to as a first occlusion generated area. The occlusion generated area in the image obtained through a second camera may be referred to as a second occlusion generated area. The processor 201 may calculate a difference between the first occlusion generated area and the second occlusion generated area. The processor 201 may identify that it is possible to extract a depth map using a plurality of cameras when the difference is within a specified range. In addition, according to an embodiment, the processor 201 may calculate a degree of matching between the plurality of cameras based on image information obtained through a plurality of cameras. The processor 201 may identify whether it is possible to extract a depth map using a plurality of cameras without error, based on the degree of matching. The processor 201 may identify that it is possible to extract the depth map using a plurality of cameras, when the difference in image information between the cameras is within a specified range.

The processor 201 according to embodiments may identify a depth map calculation scheme that is suitable for the state of the photographing environment of the electronic device 101, before calculating the depth map. The processor 201 may include a depth map calculation scheme determination unit. The depth map calculation scheme determination unit may include a weight calculation unit. In order to calculate depth information, various schemes may be defined. These various schemes may include a first scheme of determining a depth map using a plurality of cameras and a second scheme of determining a depth map using AI learning of a single camera. The processor 201 may determine a depth map based on a combination of the first scheme and the second scheme. Accordingly, the processor 201 may determine a weight (hereinafter, referred to as a first weight) to be applied to the first scheme and a weight (hereinafter, referred to as a second weight) to be applied to the second scheme. For example, the processor 201 may set the first weight to 100% in order to determine the depth map based on the first scheme. Then, the second weight may be 0. The processor 201 may obtain depth map information for an image frame, without calculating a depth map according to the second scheme. In addition, for example, the processor 201 may set the second weight to 100% to determine the depth map based on the second scheme. Then, the first weight may be zero. The processor 201 may obtain depth map information for an image frame, without calculating a depth map according to the first scheme. Further, for example, the processor 201 may determine the depth map, focusing on the first scheme. Such depth map determination may be referred to as a first scheme-based depth map determination, wherein the first weight may be determined to be greater than the second weight. Further, for example, the processor 201 may determine the depth map, focusing on the second scheme. Such depth map determination may be referred to as a second scheme-based depth map determination, wherein the second weight may be determined to be greater than the first weight.

According to an embodiment, the processor 201 may calculate a weight for the entire image. The processor 201 may calculate a weight for determining a depth map calculation scheme to be applied to the entire image. In addition, according to an embodiment, the processor 201 may calculate a weight for each local area of an image. The depth map calculation scheme may be different for each local area. For example, the processor 201 may calculate a depth map based on the second scheme for an area including an object and calculate a depth map based on the first scheme for an area including no object. The weights applied to each area may be different from each other.

The processor 201 according to embodiments may include a camera selection unit. The processor 201 may identify at least one camera according to a designated depth map calculation scheme. The at least one camera identified may be used to calculate a depth map. According to an embodiment, when the depth map calculation scheme is determined to the second scheme, the processor 201 may select a single camera that provides high quality. For example, in low illumination, the processor 201 may identify a wide-angle camera. Furthermore, for example, for an adjacent object, the processor 201 may identify an ultra-wide-angle camera. In some embodiments, the processor 201 may perform camera switching to activate the identified camera.

The processor 201 may include a depth information acquisition unit. The processor 201 may obtain depth information based on a weight. The processor 201 may obtain a first depth map based on the first scheme. The processor 201 may obtain a second depth map based on the second scheme. The processor 201 may apply a first weight to the first depth map. The processor 201 may apply a second weight to the second depth map. The processor 201 may obtain depth information by applying the first weight to the first depth map and applying the second weight to the second depth map. For example, when the first weight is 0, the processor 201 may obtain depth information by applying the second weight to the second depth map. In addition, for example, when the second weight is 0, the processor 201 may obtain depth information by applying the first weight to the first depth map. According to an embodiment, the depth map calculation scheme may be different for each area in an image. In other words, the weight may be set differently for each area in the image. The processor 201 may obtain a depth map for the entire area of the image, by calculating the depth map for each area and then merging the calculated depth maps.

The processor 201 may include a foreground and background area segmentation unit. The processor 201 may distinguish between the foreground area and the background area in an image. The processor 201 may identify each of the foreground area and the background area in the image based on the depth information. When the depth value of a corresponding area is less than a reference value, the processor 201 may identify the corresponding area as the foreground area. The foreground area may refer to an area except for the background area in the image. The foreground area may include the detected object (e.g., the main subject). When the depth value of the corresponding area is greater than or equal to the reference value, the processor 201 may identify the corresponding area as the background area. The background area refers to an area except for the foreground area in the image.

The processor 201 may include a background effect application unit. The processor 201 may apply a designated effect to the background area. The designated effect means processing additionally performed on the background area. For example, the designated effect may include a Bokeh effect, a blur effect, or a motion effect. Here, the motion effect may refer to additional processing in a designated manner (e.g., zooming, spin, panning).

Hereinafter, based on the components set forth in FIG. 2, the operation flow of the electronic device for obtaining depth map information by adaptively selecting the two schemes or combining the two schemes with weights will be described.

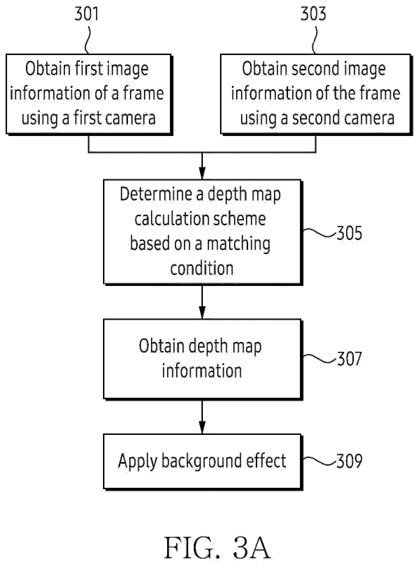

FIG. 3A illustrates an operation flow of an electronic device for obtaining depth map information based on a matching condition, according to embodiments. The electronic device (e.g., the electronic device 101) may identify whether a matching condition for a depth map calculation scheme using a plurality of cameras is satisfied. The electronic device 101 may obtain depth map information based on a result of whether the matching condition is satisfied. The matching condition may refer to a certain condition required so that no errors occur when determining a depth map using a plurality of cameras, due to a difference in information obtained from a plurality of cameras (e.g., cameras 203). In other words, if the matching condition is not satisfied, it may be expected for an error to occur when determining the depth map using the plurality of cameras. For example, when the parallax between cameras increases due to low illuminance or super-close distance, a difference between information obtained from each of the cameras may increase. Further, for example, a difference in quality between obtained images may differ depending upon each type of cameras.

Referring to FIG. 3A, in operation 301, the electronic device 101 may obtain first image information of a frame using a first camera. In operation 303, the electronic device 101 may obtain second image information of the frame using a second camera. The operations 301 and 303 may be performed for the same frame. To determine a depth map using a plurality of cameras (e.g., the first camera and the second camera), the electronic device 101 may obtain an image for the same frame through each of the plurality of cameras. One of the first camera and the second camera may be used as a main camera and the other may be a sub camera. For example, the first camera may be a wide-angle camera, and the second camera may be an ultra-wide-angle camera. As another example, the first camera may be an ultra-wide-angle camera, and the second camera may be a wide-angle camera. Further, as an example, the first camera may be a telephoto camera, and the second camera may be a wide-angle camera. As another example, the first camera may be a wide-angle camera, and the second camera may be a telephoto camera.

In operation 305, the electronic device 101 may determine a depth map calculation scheme based on the matching condition. The matching condition may mean requirements for enabling depth map determination through image information obtained from a plurality of cameras (e.g., the cameras 203). For example, if the matching condition is not satisfied, an error may be expected to occur when determining a depth map using a plurality of cameras. The depth map calculation scheme may include a first scheme of determining a depth map using a plurality of cameras, a second scheme of determining a depth map using AI learning of a single camera, or a third scheme of determining a depth map by combination of the first scheme and the second scheme.

According to an embodiment, the electronic device 101 may determine a depth map calculation scheme, based on a matching condition according to a brightness value. The electronic device 101 may use photometry with a camera, a brightness sensor (or an illuminance sensor), or an input image pixel value to obtain a brightness value. The electronic device 101 may determine the depth map calculation scheme as the second scheme, based on obtaining a brightness value less than a threshold value. The electronic device 101 may determine the depth map calculation scheme as the first scheme, based on obtaining a brightness value equal to or greater than the threshold value. In low illumination, the parallax between cameras may occur due to optical constraints. In low illumination, the quality of the first camera may be better than the quality of the second camera, or the quality of the second camera may be better than the quality of the first camera. For example, the main camera may be a telephoto camera, and the sub camera may be a wide-angle camera. Under low illumination, the quality of the wide-angle camera may be better than the quality of the telephoto camera. In a depth map calculation scheme using a plurality of cameras, when the angle of view of the main camera is less than the angle of view of the sub camera, extraction of the depth map is advantageous. Therefore, when the angle of view of the sub-camera is narrower than that of the main camera, or when a difference between the quality of the sub-camera and the quality of the main camera is relatively large, the depth map calculation scheme using multiple cameras may cause errors.

According to an embodiment, the electronic device 101 may determine a depth map calculation scheme based on the matching condition according to the proximity distance. The electronic device 101 may use a depth map utilizing a time of flight (TOF) sensor, a structured light camera, a 3D image sensor, an array camera, or a plurality of cameras to obtain a distance value. Further, in order to obtain a distance value, the electronic device 101 may use a software acquisition using a template, a software acquisition using deep learning, or a calculation method using an auto-focus value. The electronic device 101 may determine the depth map calculation scheme as the second scheme, based on obtaining a distance value of an object less than the reference value. The electronic device 101 may determine the depth map calculation scheme as the first scheme based on obtaining the distance value equal to or greater than the reference value. For example, the main camera may be a wide-angle camera, and the sub-camera may be an ultra-wide-angle camera. When an object is located at super-close distance, obtaining an image through an ultra-wide-angle camera may provide higher quality than a wide-angle camera. Since there may be a quality difference between the two cameras, it may be more advantageous to calculate the depth map using the single AI scheme.

According to an embodiment, the electronic device 101 may determine a depth map calculation scheme based on a matching condition according to image analysis. The electronic device 101 may perform image analysis. The electronic device 101 may analyze an image obtained through each of two cameras. The electronic device 101 may determine the depth map calculation scheme based on a result of the image analysis. For example, the depth map calculation scheme may be determined based on a comparison between an occlusion generated area of first image information and an occlusion generated area of second image information. The electronic device 101 may obtain the first image information for the frame through the first camera. The electronic device 101 may obtain the second image information for the frame through the second camera. The electronic device 101 may compare the first image information and the second image information. The electronic device 101 may obtain difference information based on a comparison result of the first image information and the second image information. The electronic device 101 may identify whether it is possible to obtain a depth map through a combination of the first image information and the second image information based on the difference information. According to an embodiment, the electronic device 101 may determine the depth map calculation scheme as the first scheme, based on identifying that it is possible to obtain the depth map through the combination of the first image information and the second image information. The electronic device 101 may determine the depth map calculation scheme as the second scheme, based on identifying that it is impossible to obtain the depth map through the combination of the first image information and the second image information. Further, according to an embodiment, the electronic device 101 may determine the depth map calculation scheme based on a degree of combination of the first image information and the second image information. The higher the degree of combination of the first image information and the second image information, the higher the weight to be applied to the first scheme. The lower the degree of combination of the first image information and the second image information, the higher the weight to be applied to the second scheme.

The electronic device 101 may determine a depth map calculation scheme based on at least one of the above-described matching conditions. The electronic device 101 may identify a scheme capable of providing a best performance (hereinafter, referred to as optimal performance) from among a first scheme of calculating a depth map using a plurality of cameras, a second scheme of calculating a depth map using an AI technique of a single camera, and a third scheme of determining a depth map combining the first scheme and the second scheme according to a given situation. Here, the best performance may imply that more accurate depth map may be derived. When the third scheme is utilized, the electronic device 101 may determine a first weight for the first scheme and a second weight for the second scheme.

The electronic device 101 may calculate the same weight for each frame of an image or independently calculate the weight for each area. Here, when the depth map is calculated by combining the first scheme and the second scheme, the weight may refer to a ratio applied to each of the first scheme and the second scheme. A first weight may be applied to the first scheme and a second weight may be applied to the second scheme. According to an embodiment, when the first scheme of calculating a depth map using a plurality of cameras provides the optimal performance, the electronic device 101 may determine the first scheme as the depth map calculation scheme. For example, the electronic device 101 may set the first weight to 0% and the second weight to 100%. Further, according to an embodiment, when the second scheme of calculating a depth map using an AI technique of a single camera provides the optimal performance, the electronic device 101 may determine the second scheme as the depth map calculation scheme. The electronic device 101 may set the first weight to 100% and the second weight to 0%. In addition, according to an embodiment, when the third scheme according to the first weight of the first scheme and the second weight of the second scheme provides the optimal performance, the electronic device 101 may determine the third scheme by the depth map calculation scheme. In the third scheme, the electronic device 101 may supplement the depth image of a single scheme (e.g., the first scheme or the second scheme) by setting different weights for each area.

According to an embodiment, when the brightness value is less than a reference value, the electronic device 101 may determine the second scheme as the depth map calculation scheme, or may determine the third scheme as the depth map calculation scheme, in which the second weight for the second scheme is set to be higher than the first weight for the first scheme. This is because in a low illumination environment, a difference in brightness may occur due to differences in physical characteristics between cameras.

According to an embodiment, when the distance value from the object is less than a reference value, the electronic device 101 may determine the second scheme as the depth map calculation scheme, or may determine the third scheme as a depth map calculation scheme, in which the second weight for the second scheme is set to be higher than the first weight for the first scheme. This is because at a super-close distance, there is a significant difference between a quality using a camera with a wider angle of view and a quality using a camera with a relatively narrower angle of view.

According to an embodiment, the electronic device 101 may determine the second scheme as the depth map calculation scheme with respect to an area having saturated luminance, an area including a moving object, or an area where a designated type of object is located. Alternatively, the electronic device 101 may determine, with respect to the area, the third scheme as the depth map calculation scheme, in which the second weight for the second scheme is set to be higher than the first weight for the first scheme. Depth map errors may occur in texture-less, reflective, saturated, or transparent subjects in which a feature matching is difficult. Accordingly, consistent processing may be required for a single object.

According to an embodiment, when the difference between image information obtained through two cameras is greater than a threshold value, the electronic device 101 may determine the third scheme as the depth map calculation scheme, in which the second weight for the second scheme is set higher than the first weight for the first scheme. Image deviations (e.g., owing to lens characteristics such as brightness, noise, sharpness, distortion, etc.) between images obtained may cause errors in the depth map. For example, in the first scheme using multiple cameras, there is a high probability of an error arising upon combining two images, so the electronic device 101 may determine the depth map calculation scheme, based on the difference between the first image information obtained through the first camera and the second image information obtained through the second camera.

In operation 307, the electronic device 101 may obtain depth map information. The electronic device 101 may identify at least one camera based on the depth map calculation scheme. When the depth map calculation scheme is either the first scheme or the third scheme, the electronic device 101 may identify a plurality of cameras. The electronic device 101 may obtain the depth map information based on a plurality of cameras. When the depth map calculation scheme is the second scheme, the electronic device 101 may identify one camera (e.g., a single camera). The electronic device 101 may obtain the depth map information based on the single camera. In some embodiments, the electronic device 101 may perform camera switching to improve the performance of the single camera.

The electronic device 101 may obtain the depth map information through the identified at least one camera. The electronic device 101 may calculate depth information based on a weight applied to each scheme. The electronic device 101 may obtain the depth map information by calculating a local weight between a depth map (hereinafter, the first depth map) obtained according to a scheme using a plurality of cameras (e.g., the first scheme) and a depth map (hereinafter, the second depth map) obtained according to an AI scheme (e.g., the second scheme) using deep learning of a single camera. For example, the electronic device 101 may obtain the depth map information using only the first scheme. The depth map information may include the first depth map. The weight applied to the second scheme may be zero. The electronic device 101 may obtain the depth map information using only the first scheme, without a depth map calculation procedure according to the second scheme. Further, for example, the electronic device 101 may obtain the depth map information using only the second scheme. The depth map information may include the second depth map. The weight applied to the first scheme may be 100%. The electronic device 101 may obtain the depth map information using only the second scheme, without a depth map calculation procedure according to the first scheme.

In operation 309, the electronic device 101 may apply a background effect. The electronic device 101 may distinguish image areas of a frame into a foreground area and a background area. The electronic device 101 may identify the background area of an image based on the depth map information. For example, the electronic device 101 may segment a foreground and a background on the basis of a focus area from the obtained depth information. The electronic device 101 may apply a background effect to the background area. The background effect refers to visual processing performed on the background area. For example, the background effect may include a Bokeh effect, a blur effect, or a motion effect (e.g., zooming, spinning, panning). The electronic device 101 may provide a background blur effect using an image processing technique, such as e.g., blur processing, Bokeh (circle of confusion) processing, or the like onto the segmented background. The electronic device 101 may output an image with the background effect applied through a display.

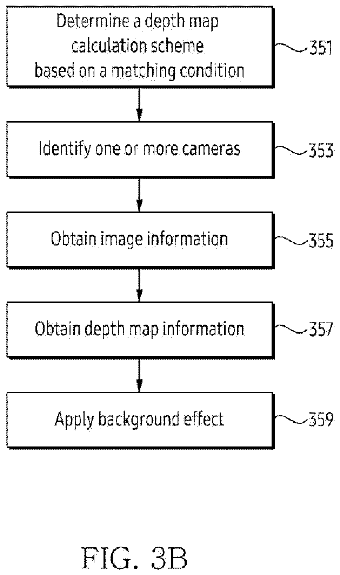

By determining the depth map calculation scheme before obtaining a depth map, an unnecessary amount of calculation may be reduced. For example, when the second scheme is determined as the depth map calculation scheme, the electronic device 101 may not calculate a depth map according to the first scheme. The electronic device 101 may obtain a depth map based on a single camera, without a procedure of obtaining the depth map using a plurality of cameras. The electronic device 101 may achieve more accurate performance with a relatively less amount of calculation by determining a matching condition in advance. Meanwhile, in FIG. 3A, an operation of determining a depth map calculation scheme after obtaining image information through a camera is described, but embodiments of the disclosure are not limited thereto. According to another embodiment, before obtaining image information through a camera, camera setting may be first performed based on the matching condition. Hereinafter, in FIG. 3B, an embodiment in which camera setting according to the matching condition is preferentially performed will be described.

FIG. 3B illustrates an operation flow of an electronic device for obtaining depth map information through a camera set based on a matching condition, according to an embodiment.

Referring to FIG. 3B, in operation 351, the electronic device 101 may identify a depth map calculation scheme based on a matching condition. The electronic device 101 may determine a depth map calculation scheme according to a parameter obtained through a sensor of the electronic device 101, before photographing an image. According to an embodiment, the electronic device 101 may obtain a brightness value through an illuminance sensor. The electronic device 101 may determine the depth map calculation scheme based on the brightness value. For example, the electronic device 101 may determine the depth map calculation scheme as the first scheme, based on identifying that the brightness value is greater than or equal to a threshold value. In addition, for example, the electronic device 101 may determine the depth map calculation scheme as the second scheme, based on identifying that the brightness value is less than the threshold value.

According to an embodiment, the electronic device 101 may obtain a distance value through a distance detection sensor, a 3D image sensor, or a structured light camera. The electronic device 101 may determine a depth map calculation scheme based on a distance value. For example, the electronic device 101 may determine the depth map calculation scheme as the first scheme, based on identifying that the distance value is equal to or greater than a reference value. In addition, for example, the electronic device 101 may determine the depth map calculation scheme as the second scheme based on identifying that the distance value is less than the reference value.

In operation 353, the electronic device 101 may identify one or more cameras. The electronic device 101 may identify one or more cameras among a plurality of cameras, based on a depth map calculation scheme. The electronic device 101 may identify at least two cameras, when obtaining the depth map through the first scheme. The electronic device 101 may identify one camera, when obtaining the depth map through in second scheme.

For example, in an environment where the object is close, the ultra-wide-angle camera may provide the electronic device 101 with an image having better quality than the wide-angle camera. Here, the term 'better quality' may imply that the subject is captured more clearly due to its focal length. According to an embodiment, the electronic device 101 may identify an ultra-wide-angle camera as the main camera. The electronic device 101 may identify the ultra-wide-angle camera when a main subject, e.g., an object, is located within a reference value. The electronic device 101 may activate the ultra-wide-angle camera. When the current main camera is not an ultra-wide-angle camera, the electronic device 101 may set the main camera to be the ultra-wide-angle camera by means of camera switching.

For example, in an environment where the brightness is low, a wide-angle camera may provide an image of better quality than a telephoto camera to the electronic device 101. According to an embodiment, the electronic device 101 may identify a wide-angle camera as the main camera. The electronic device 101 may identify a wide-angle camera in an environment where the brightness is lower than a threshold value, for example, in a low illumination environment. The electronic device 101 may activate the wide-angle camera. When the current main camera is not a wide-angle camera, the electronic device 101 may set the main camera to a wide-angle camera by means of camera switching.

In operation 355, the electronic device 101 may obtain image information. The electronic device 101 may obtain image information through the identified one or more cameras. According to an embodiment, the electronic device 101 may obtain image information through an ultra-wide angle camera in a proximity environment (where the object is located at a distance less than a reference value). Further, according to an embodiment, in such a low illumination environment (e.g., an environment having a brightness value less than a threshold value), the electronic device 101 may obtain image information through a wide angle camera. Further, according to an embodiment, when a plurality of cameras are identified in the operation 353, the electronic device 101 may obtain image information through each of the plurality of cameras.

In operation 357, the electronic device 101 may obtain depth map information. According to an embodiment, the electronic device 101 may obtain depth map information based on a first scheme. The electronic device 101 may obtain depth map information based on the first scheme without calculating the depth map by a second scheme. The electronic device 101 may obtain the depth map information by combining image information obtained through each of a plurality of cameras. According to another embodiment, the electronic device 101 may the obtain depth map information based on the second scheme. The electronic device 101 may obtain the depth map information based on a main camera set through a second scheme and an AI learning technique of the main camera. The electronic device 101 may obtain the depth map information based on the second scheme without calculating the depth map using a plurality of cameras.

In operation 359, the electronic device 101 may apply a background effect. The electronic device 101 may distinguish areas of an image of a frame into a foreground area and a background area. The electronic device 101 may identify a background area of the image based on the depth map information in the operation 357. The electronic device 101 may apply a background effect (e.g., Bokeh effect, blur effect, or motion effect (e.g., zooming, spin, panning)) onto the background area. The electronic device 101 may output an image with the background effect applied thereto, through a display.

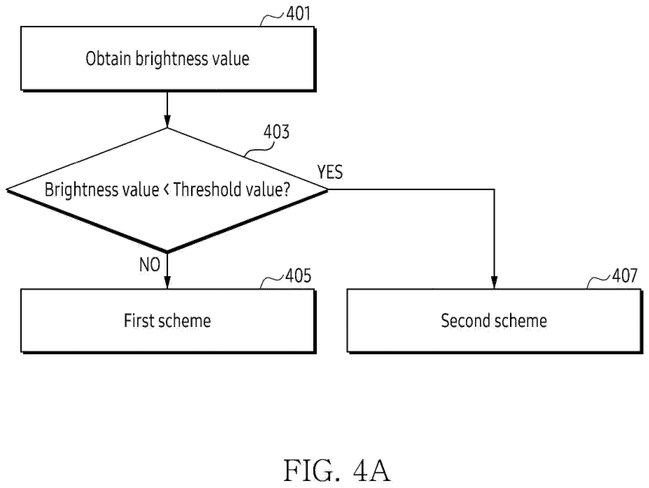

FIG. 4A illustrates an operation flow of an electronic device for selecting a depth map calculation scheme based on a brightness value, according to an embodiment. The electronic device (e.g., the electronic device 101) may select a depth map calculation scheme from among various schemes or determine a depth map calculation scheme of applying a weight to at least two schemes. The various schemes may include a first scheme of determining a depth map using a plurality of cameras and a second scheme of determining a depth map using AI learning of a single camera. The operation of the electronic device 101 may be performed by a processor (e.g., the processor 201) and an illuminance sensor (e.g., the sensor 205).

Referring to FIG. 4A, in operation 401, the electronic device 101 may obtain a brightness value. According to an embodiment, the electronic device 101 may obtain a brightness value of a frame through an illuminance sensor (e.g., the sensor 205). Further, according to an embodiment, the electronic device 101 may obtain a brightness value based on a pixel value of a captured image. Further, according to an embodiment, the electronic device 101 may obtain a brightness value based on photometry through at least one camera.

In operation 403, the electronic device 101 may identify whether the brightness value is less than a threshold value. Electronic device 101 may identify whether the surrounding environment where an image is photographed is of a low illumination environment. The threshold value may be used to identify whether an error in the depth map is expected due to a difference in quality between cameras. Under extreme low illuminance, the difference in physical characteristics (e.g., lens, sensor performance) between cameras may be maximized. Due to the difference in exposure values or the difference in the light receiver, the lower the illuminance, the larger the difference in quality between images obtained through the cameras may occur.

The electronic device 101 may perform operation 405 when the brightness value is not less than the threshold value. The electronic device 101 may perform operation 407 when the brightness value is less than the threshold value.

In operation 405, the electronic device 101 may determine the first scheme as a depth map calculation scheme. The electronic device 101 may obtain a depth map using a plurality of cameras. The electronic device 101 may obtain a depth map using a plurality of cameras, in case where the current brightness value is not dark enough to cause errors due to deviation in performance between the cameras.

In operation 407, the electronic device 101 may determine the second scheme as a depth map calculation scheme. The electronic device 101 may obtain a depth map using a learning result of a single camera. In this case, in case where the quality of the image obtained through the sub-camera is greater than the quality of the image obtained through the main camera of the electronic device 101, the electronic device 101 may perform camera switching so that the current sub-camera is set to be the main camera.

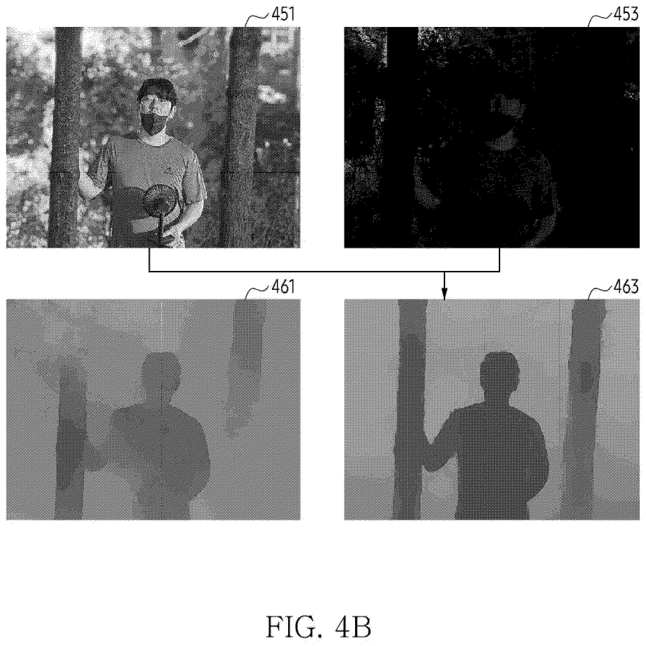

FIG. 4B illustrates an example of selecting a depth map calculation scheme based on a brightness value, according to an embodiment.

Referring to FIG. 4B, the electronic device (e.g., the electronic device 101) may obtain images for a frame through a plurality of cameras. The electronic device 101 may obtain a first image 451 from the frame through a first camera. The electronic device 101 may obtain a second image 453 from the frame through a second camera.

The electronic device 101 may obtain a brightness value. The electronic device 101 may determine a depth map calculation scheme based on the brightness value. According to an embodiment, the electronic device 101 may determine the depth map calculation scheme based on the brightness value of a sub-camera (e.g., a second camera). The electronic device 101 may obtain the brightness value of the second image 453. When the brightness value of the second image 453 is less than a reference value, the electronic device 101 may obtain the depth map using the second scheme. Further, according to an embodiment, the electronic device 101 may determine a depth map calculation scheme based on a brightness value of at least one of the first camera and the second camera. The electronic device 101 may obtain the brightness value of the first image 451. The electronic device 101 may obtain the brightness value of the second image 453. When at least one of the brightness value of the first image 451 and the brightness value of the second image 453 is less than the reference value, the electronic device 101 may obtain the depth map using the second scheme. Meanwhile, as opposed to the above-described, according to an embodiment, when the difference in the brightness value between the two cameras is greater than or equal to the threshold value, the electronic device 101 may obtain the depth map using the second scheme. A large difference in brightness value implies a large difference in the amount of light between images obtained through the two cameras. Such a difference in brightness may cause errors in the depth map through image combining.

The electronic device 101 may obtain a first depth map 461 using a plurality of cameras. For example, the electronic device 101 may obtain the first depth map 461 based on the first scheme. The electronic device 101 may obtain a second depth map 463 using an AI learning technique of a single camera. For example, the electronic device 101 may obtain the second depth map 463 based on the second scheme. As illustrated in FIG. 4B, depth information related to the main subject in the first image 451 may be more clearly identified in the second depth map 463 than in the first depth map 461.

In FIG. 4B, an example of selecting a depth map calculation scheme based on a brightness value of a sub-camera under a situation that the main camera is the first camera and the sub-camera is the second camera is described, but embodiments of the disclosure are not limited thereto. According to another embodiment, the electronic device 101 may select a depth map calculation scheme based on a brightness value of the main camera. The main camera may be the first camera, and the sub-camera may be the second camera. The electronic device 101 may identify that the brightness value of the first camera is less than a reference value. The electronic device 101 may select the second scheme as the depth map calculation scheme. However, since the quality of the sub-camera is better than that of the main camera, the electronic device 101 may perform camera switching. The electronic device 101 may set the main camera as the second camera. Since the exposure value of the second camera is relatively large, a depth map may be calculated based on a learning result of the second camera.

In FIGS. 4A to 4B, an example in which the electronic device 101 selects the depth map calculation scheme using the first scheme or the second scheme has been described, but embodiments of the disclosure are not limited thereto. In addition to the second scheme, the electronic device 101 may obtain the depth map using a third scheme that combines the first scheme and the second scheme. In such a circumstance, for the low illumination environment of FIG. 4B, the second weight applied to the second scheme may be set to be greater than the first weight applied to the first scheme.

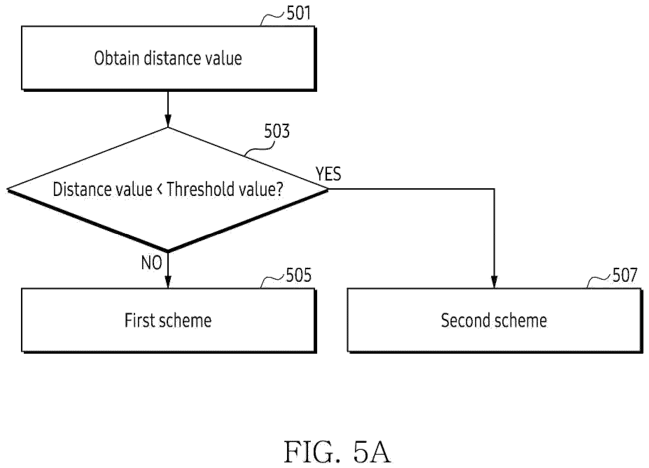

FIG. 5A illustrates a flowchart of an operation of an electronic device for selecting a depth map calculation scheme based on a distance value, according to an embodiment. The electronic device (e.g., the electronic device 101) may select a depth map calculation scheme from various schemes or may determine a depth map calculation scheme of applying a weight to two or more schemes. The various schemes may include a first scheme of determining a depth map using a plurality of cameras and a second scheme of determining the depth map using AI learning of a single camera. The operation of the electronic device 101 may be performed by a processor (e.g., the processor 201) and a distance detection sensor (e.g., the sensor 205).

Referring to FIG. 5A, in operation 501, the electronic device 101 may obtain a distance value. Here, a distance value refers to a distance from a main subject within a captured image. According to an embodiment, the electronic device 101 may obtain the distance value through a distance detection sensor (e.g., a TOF sensor) (e.g., the sensor 205). Further, according to an embodiment, the electronic device 101 may obtain the distance value through a 3D image sensor (e.g., the sensor 205). Further, according to an embodiment, the electronic device 101 may obtain the distance value through a structured light camera.

In operation 503, the electronic device 101 may identify whether the distance value is less than a reference value. The electronic device 101 may identify whether an object for an image to be captured is located at a close distance. The reference value may be used to identify whether an error in the depth map is expected due to a difference in quality between the cameras. At a super-close distance, a large parallax between cameras may occur. According to an embodiment, the reference value may be determined based on the cameras set in the electronic device 101. For example, the reference value for a case where the main camera is a wide-angle camera and the sub-camera is an ultra-wide-angle camera may be different from the reference value for a case where the main camera is a telephoto camera and the sub-camera is a wide-angle camera.

The electronic device 101 may perform operation 505 when the distance value is greater than or equal to the reference value. The electronic device 101 may perform operation 507 when the distance value is less than the reference value.

In operation 505, the electronic device 101 may determine the first scheme as a depth map calculation scheme. The electronic device 101 may obtain the depth map using a plurality of cameras. When the position of the object is not close enough to cause errors due to the difference in angles of view between the cameras, the electronic device 101 may obtain the depth map using a plurality of cameras.

In operation 507, the electronic device 101 may determine the second scheme as a depth map calculation scheme. The electronic device 101 may obtain a depth map based on a learning result of a single camera. At a super-close distance, as the angle of view for each camera is different, the difference in quality between obtained images is relatively large. For example, in case where the main camera is a wide-angle camera and the sub-camera is an ultra-wide-angle camera, the electronic device 101 may identify that the quality of an image obtained through the sub-camera at a super-close distance is higher than the quality of an image obtained through the main camera. In such a case, the electronic device 101 may perform camera switching so that the current sub-camera serves as the main camera.

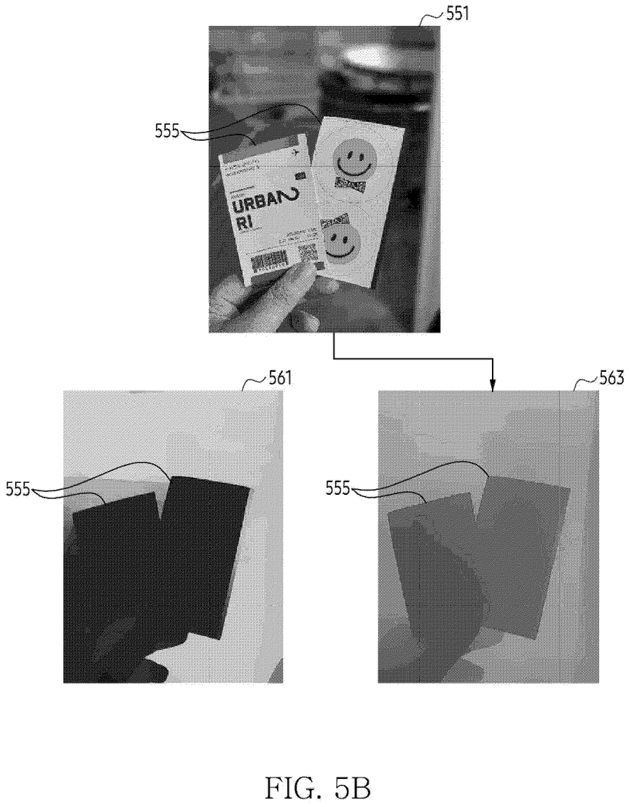

FIG. 5B illustrates an example of selecting a depth map calculation scheme according to a distance value, according to an embodiment.

Referring to FIG. 5B, an electronic device (e.g., the electronic device 101) may obtain a distance from an object 555 within an image 551. The electronic device 101 may determine a depth map calculation scheme based on the obtained distance. According to an embodiment, when the obtained distance is within a reference value, the electronic device 101 may obtain the depth map using the second scheme. Further, when the obtained distance is within the reference value, the electronic device 101 may identify whether a difference between the angle of view provided by the first camera and the angle of view provided by the second camera is relatively large. For example, the main camera may be the first camera, and the first camera may be an ultra-wide-angle camera. The sub-camera may be the second camera, and the second camera may be a wide-angle camera. Within the distance within the reference value, a difference may occur between depth information obtained through the ultra-wide-angle camera and depth information obtained through the wide-angle camera. Accordingly, in order to reduce errors due to the depth map, the electronic device 101 may obtain the depth map based on an AI technique of a single camera, for example, the second scheme.

The electronic device 101 may obtain a first depth map 561 using a plurality of cameras. For example, the electronic device 101 may obtain the first depth map 561 based on the first scheme. The electronic device 101 may obtain a second depth map 563 using an AI learning technique of a single camera. For example, the electronic device 101 may obtain the second depth map 563 based on the second scheme. As illustrated in FIG. 5B, depth information related to the main subject in the first image 551 may be more clearly identified in the second depth map 563 than in the first depth map 461.

In FIGS. 5A to 5B, an example in which the electronic device 101 selects the depth map calculation scheme using the first scheme or the second scheme has been described, but embodiments of the disclosure are not limited thereto. In addition to the second scheme, the electronic device 101 may obtain the depth map using a third scheme that combines the first scheme and the second scheme. In such a case, for the object 555 located at the super-close distance of FIG. 5B, the second weight applied to the second scheme may be set to be larger than the first weight applied to the first scheme.

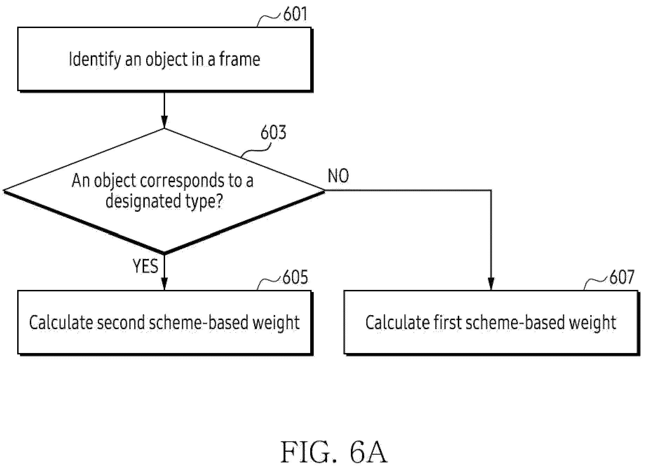

FIG. 6A illustrates an example operation flow of an electronic device for selecting a depth map calculation scheme based on an object type, according to an embodiment. An error-prone object type may be predefined. The electronic device (e.g., the electronic device 101) may determine a depth map calculation scheme based on whether the identified object is a predefined type. The depth map calculation scheme may include a first scheme of determining the depth map using a plurality of cameras, a second scheme of determining the depth map using AI learning of a single camera, or a third scheme of determining the depth map combining the first scheme and the second scheme. The operation of the electronic device 101 may be performed by a processor (e.g., the processor 201).

Referring to FIG. 6A, in operation 601, the electronic device 101 may identify an object in a frame. The electronic device 101 may obtain an image for the frame through at least one camera. The electronic device 101 may identify the object from the image. According to an embodiment, the electronic device 101 may identify the object based on an object detection algorithm. For example, the electronic device 101 may recognize the object in the image through matching (e.g., feature matching) of feature points of the object.

In operation 603, the electronic device 101 may determine whether the identified object corresponds to a designated type. Here, a designated type represents characteristics of an object that is likely to cause an error for a depth map, due to a difference in image information obtained from each of a plurality of cameras of the first scheme. According to an embodiment, the designated type may be a transparent material. For example, an item corresponding to the transparent material may include, for example, a glass cup, a straw, or glasses. As the transparency of the object increases, the number of feature points in the image may decrease. As the number of feature points decreases, the feature matching may not be easy. As such, a difference may occur between a result of feature matching for an object in an image of the first camera of the first scheme and a result of feature matching for an object in an image of the second camera of the second scheme.

According to an embodiment, the designated type may be a repetition pattern (or a mesh pattern). With respect to the same object, view points in each camera may be different. Due to the repetition pattern of the object, a sense of perspective on the same object may be recognized differently in between two cameras. The results of feature matching with respect to the object may be different from each other. For example, a difference may occur between information on an object obtained from an image of the first camera of the first type and information on an object obtained from an image of the second camera of the second type.

According to an embodiment, the designated type may be texture-less. A texture-less object refers to an object having almost no pattern on a surface of the object. Since there are few patterns, feature matching may not be easy. Even when the object is detected with an individual stereo camera, a difference may occur between the information obtained by the cameras. For example, due to the small number of feature points, the first scheme may be difficult to provide stable depth map information.

The electronic device 101 may perform operation 605 when the identified object corresponds to the designated type. The electronic device 101 may perform operation 607 when the identified object does not correspond to the designated type.

In operation 605, the electronic device 101 may perform a second scheme-based weight calculation. Here, the second scheme-based weight calculation refers to an operation of setting a second weight to be applied to the second depth map according to the second scheme to be larger than a first weight to be applied to the first depth map according to the first scheme. When it is determined that it is difficult to provide a stable depth map through cameras of the first scheme due to a transparent material, texture-less, or repetition pattern of the object, the electronic device 101 may use the second scheme. The electronic device 101 may determine the second scheme as the depth map calculation scheme, or may determine a third scheme as the depth map calculation scheme, in which the second weight for the second scheme is set to be larger than the first weight for the first scheme.

In operation 607, the electronic device 101 may perform a first scheme-based weight calculation. Here, the first scheme-based weight calculation refers to an operation of setting the first weight to be applied to the first depth map according to the first scheme to be larger than the second weight to be applied to the second depth map according to the second scheme. The electronic device 101 may identify that a stable depth map may be provided through cameras of the first scheme, if it is an object of which feature matching is easy. The electronic device 101 may use the first scheme. The electronic device 101 may determine the first scheme as the depth map calculation scheme, or may determine a third scheme as a depth map calculation scheme, in which the first weight for the first scheme is set to be larger than the second weight for the second scheme.

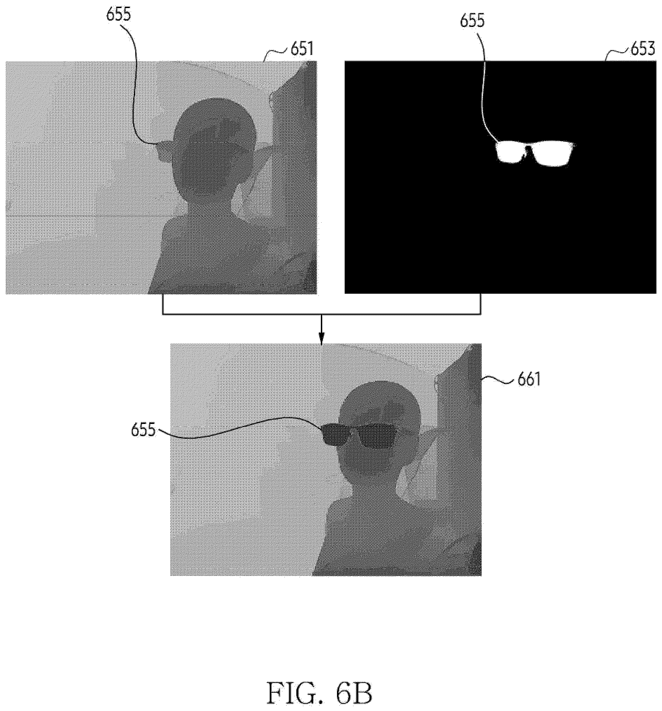

FIG. 6B illustrates an example of selecting a depth map calculation scheme based on an object type according to an embodiment. Instead of selecting the same depth map calculation scheme in the entire areas in an image, the electronic device (e.g., the electronic device 101) may independently set a weight for the depth map calculation scheme for each area in the image.

Referring to FIG. 6B, the electronic device 101 may obtain a first depth map 651 using a plurality of cameras. For example, the electronic device 101 may obtain the first depth map 651 based on the first scheme. An object 655 may be included in an image. For example, the object 655 may be glasses including a transparent material (e.g., glass). However, the object 655 may not be accurately detected only using the first depth map 651.

The electronic device 101 may obtain an image through at least one camera. The electronic device 101 may detect the object 655 in the image. The electronic device 101 may determine a depth map calculation scheme based on the object 655. According to an embodiment, the electronic device 101 may add a weight with respect to the object 655 to the first depth map 651 according to the first scheme. The electronic device 101 may differently determine the depth map calculation scheme for the area of the object 655 in the image. The area of the object 655 refers to a physical area occupied by the object 655 in the image. Since it is not easy to detect the object 655 only with the first depth map 651, the electronic device 101 may detect the object 655 based on the second scheme. The electronic device 101 may set a higher weight onto the object 655 based on an AI learning technique for a single camera. For example, the electronic device 101 may determine a depth map calculation scheme for the area of the object 655 as the second scheme. Here, the second weight for the second scheme may be 100%.

The electronic device 101 may use the second depth map according to the second scheme for the area of the object 655 and may use the first depth map 651 according to the first scheme for an area except for the area of the object 655 in the image. The electronic device 101 may obtain a final depth map 661 by combining the first depth map 651 for the area except for the area of the object 655 in the image and the second depth map for the area of the object 655. As shown in FIG. 6B, the object 655 may be more clearly identified in the final depth map 661 in which object information is reflected than when only the first depth map 651 is used.

In FIG. 6B, an example of adding weights only to the area of the object 655 has been described, but it may be also understood as an embodiment of the disclosure that the electronic device 101 divides the image into a plurality of local areas and sets the depth map calculation scheme for each local area differently. Here, such a difference in the depth map calculation scheme may include not only the distinction between the first scheme, the second scheme, and the third scheme, but also the different setting of the first weight and the second weight in the third scheme.

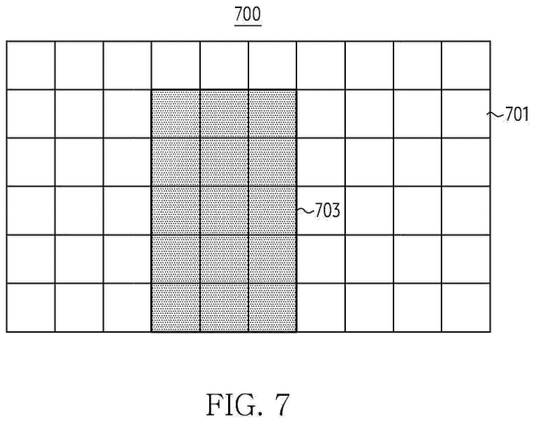

FIG. 7 illustrates an example of selecting a depth map calculation scheme for each area according to an embodiment. Referring to FIG. 7, the electronic device 101 may divide an image 700 obtained from a frame into a plurality of areas. The electronic device 101 may determine a depth map calculation scheme for each area. According to an embodiment, the electronic device 101 may determine a depth map calculation scheme for each area based on an object detected. As an example, an object may be detected in the image 700. The electronic device 101 may divide the image 700 into an external area 701 and an area 703 in which the object is detected. The external area 701 may be an area in which no object is detected, from among a plurality of areas of the image 700, for example, an area except for the area 703 in which the object is detected. The electronic device 101 may obtain the depth map based on the second scheme for the area 703 where the object is detected. The electronic device 101 may obtain the depth map based on a different scheme for the external area 701. Here, the different scheme may refer to the first scheme or a third scheme according to a combination of the first scheme and the second scheme.

In FIG. 7, although the area distinction according to detection of an object in the image 700 has been described, but embodiments of the disclosure are not limited thereto. According to an embodiment, the electronic device 101 may determine a depth map calculation scheme for each area based on a brightness value. For example, a different brightness value may be identified for each area in the image 700. Unlike an illuminance sensor, a brightness value according to pixels in an image or a brightness value by photometry of a camera may be determined differently in one image 700. The electronic device 101 may obtain a depth map based on the second scheme for an area in which the measured brightness value is lower than a threshold value. In addition, according to an embodiment, the electronic device 101 may determine a depth map calculation scheme for each area based on identifying a saturation area or a moving area in a high dynamic range (HDR) function. For example, the electronic device 101 may identify a saturation area extracted in an HDR blending process. The electronic device 101 may obtain a depth map for the saturation area, based on the second scheme. This is because for a part where the brightness is saturated, there is a high probability that an error will occur in the depth map according to the first scheme. Further, for example, the electronic device 101 may identify the moving area according to an exposure value. The electronic device 101 may obtain a depth map for the moving area, based on the second scheme. Like the saturation area, in the moving area, an error may occur in the depth map according to the first scheme.

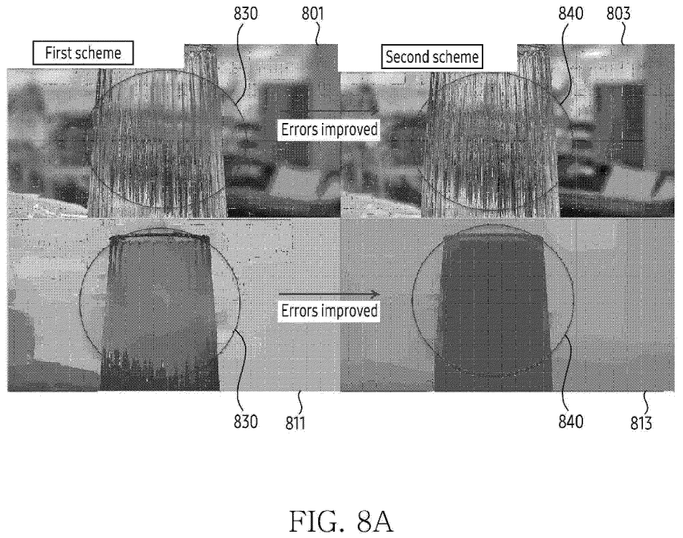

FIG. 8A illustrates an example of image processing using a depth map at a close distance, according to an embodiment.

Referring to FIG. 8A, the electronic device 101 may obtain an image 801 based on a first scheme. Referring to a first depth map 811 according to the first scheme, the first depth map 811 may not accurately indicate a depth of a transparent object (e.g., glass cup). Accordingly, the electronic device 101 may determine an area 830 for the object in the first depth map 811 as a background area. The electronic device 101 may apply a background effect to the area 830. Referring to the image 801, blurring processing may be identified in the area 830. However, since the transparent object corresponds to the foreground rather than the background area, such blurring processing may not be appropriate. The electronic device 101 may obtain an image 803 based on the second scheme based on identifying that the object in the image is a transparent object. Referring to the second depth map 813 according to the second scheme, a second depth map 813 indicates that the transparent object (e.g., a glass cup) is located close to the camera. The electronic device 101 may determine an area 840 for the object in the second depth map 813, as the foreground area. The electronic device 101 does not apply any background effect to the area 840. Referring to the image 803, it may be confirmed that the glass cup is clearly displayed without blurring in the area 840.

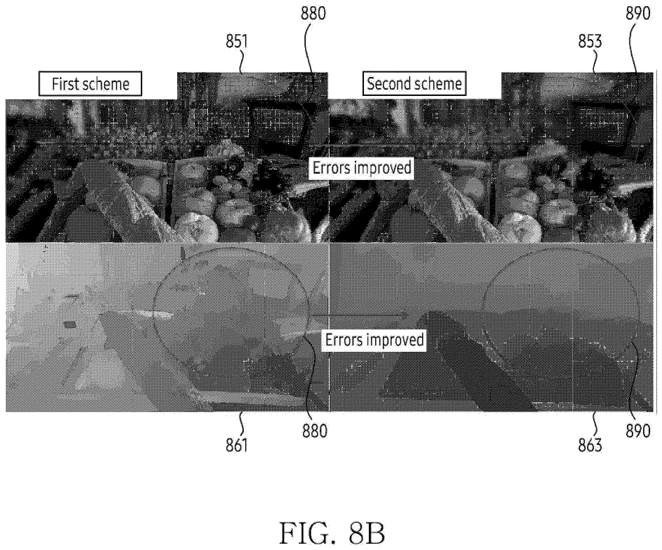

FIG. 8B illustrates an example of image processing using a depth map in low illuminance, according to an embodiment.

Referring to FIG. 8B, the electronic device 101 may obtain an image 851 based on a first scheme. Referring to a first depth map 861 according to the first scheme, the first depth map 861 may not accurately indicate a depth of an object (e.g., a flower) of low illumination. Accordingly, the electronic device 101 may determine an area 880 for the object in the first depth map 811 as a foreground area. The electronic device 101 may not apply a background effect to the area 880. In the area 880 of the image 851, it may be confirmed that an object is clearly displayed without blurring processing. However, since the object corresponds to a background area, a background effect (e.g., blurring) is required. The electronic device 101 may obtain an image 853 based on the second scheme, based on identifying a low illumination environment. Referring to the second depth map 863 according to the second scheme, the second depth map 863 indicates that the distance from the object (e.g., a flower) is located farther than the object in another foreground area. The electronic device 101 may determine an area 890 for the object in the second depth map 813, as a background area. The electronic device 101 may apply a background effect to the area 840. Blurring processing may be applied to the area 840 of the image 853

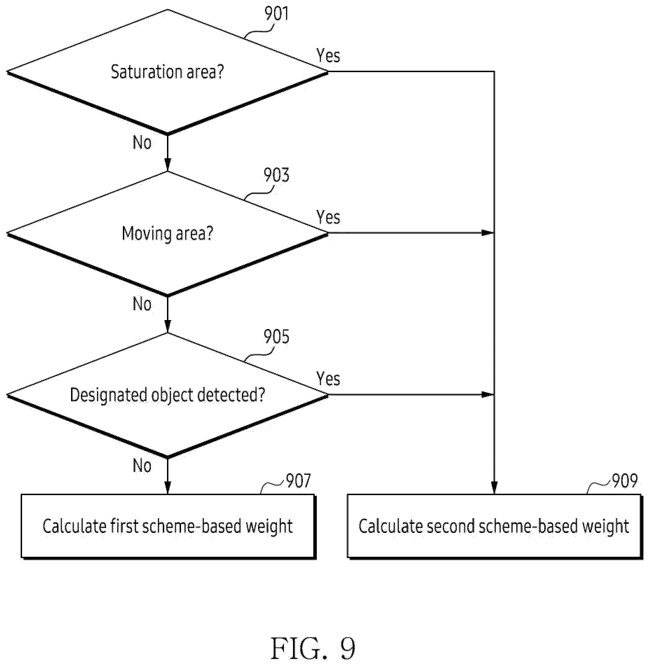

FIG. 9 illustrates an operation flow of an electronic device for determining a depth map calculation scheme according to characteristics of an area, according to an embodiment. Operations of the electronic device (e.g., the electronic device 101) may be performed by a processor (e.g., the processor 201).

Referring to FIG. 9, in operation 901, the electronic device 101 may identify whether there is a saturation area. The saturation area refers to an area in which brightness is saturated in a high dynamic range (HDR) function. In the saturation area of an image, it may be difficult to accurately represent the brightness experienced by an actual user. According to the first scheme, it may not be easy to obtain an accurate depth map even if images are combined together. As such, the electronic device 101 may identify whether there is a saturation area in the image. When there is no saturation area in the image, the electronic device 101 may perform operation 903. When there is a saturation area in the image, the electronic device 101 may perform operation 909.

In operation 903, the electronic device 101 may identify whether a moving area is present. Such a moving area refers to an area where a moving object is captured in an image. An exposure value may be changed according to movement of an object. Due to the changed exposure values, it may not be easy to obtain an accurate depth map, even if the images are combined according to the first scheme. As such, the electronic device 101 may identify whether a moving area is present in an image. When the moving area does not exist in the image, the electronic device 101 may perform operation 905. When the moving area exists in the image, the electronic device 101 may perform operation 909.

In operation 905, the electronic device 101 may identify whether a designated object is detected. The electronic device 101 may identify that for a certain type of an object (e.g., a transparent material, a repetition pattern, a mesh pattern, a texture-less), it is not easy to obtain an accurate depth map, even if images are combined according to the first scheme. For the operation of the electronic device 101, the descriptions of FIGS. 6A to 6B may be referred to. The electronic device 101 may perform operation 907 when the designated object is not detected in the image. The electronic device 101 may perform operation 909 when the designated object is detected in the image.

In operation 907, the electronic device 101 may perform a first scheme-based weight calculation. Here, the first scheme-based weight calculation refers to an operation of setting a first weight to be applied to a first depth map according to the first scheme to be higher than a second weight to be applied to a second depth map according to the second scheme. The electronic device 101 may identify that a stable depth map may be provided through cameras of the first scheme, if it is an object of easy feature matching. The electronic device 101 may use the first scheme. The electronic device 101 may determine the first scheme as a depth map calculation scheme, or may determine a third scheme, in which the first weight for the first scheme is set to be higher than the second weight for the second scheme, as a depth map calculation scheme.

In operation 909, the electronic device 101 may perform a second scheme-based weight calculation. Here, the second scheme-based weight calculation refers to an operation of setting the second weight to be applied to the second depth map according to the second scheme to be higher than the first weight to be applied to the first depth map according to the first scheme. When it is determined that it is difficult to provide a stable depth map through cameras of the first scheme due to a transparent material, texture-less, or repetition pattern of the object, the electronic device 101 may use the second scheme. The electronic device 101 may determine the second scheme as a depth map calculation scheme, or may determine a third scheme, in which the second weight for the second scheme is set to be higher than the first weight for the first scheme, as a depth map calculation scheme.

While those three operations 901, 903, and 905 are sequentially illustrated in FIG. 9, embodiments of the disclosure are not limited thereto. According to an embodiment, at least some of the conditions illustrated in FIG. 9 may be performed in parallel. For example, the electronic device 101 may perform the saturation area identification of the operation 901, the moving area identification of the operation 903, or the object detection identification of the operation 905, all in parallel (or independently). For example, whether or not a specific condition is satisfied does not affect a determination of whether or not another specific condition is satisfied. According to an embodiment, at least some of the conditions illustrated in FIG. 9 may be omitted. For example, the electronic device 101 may perform only the operation 901 and the operation 905, and may not perform the operation 903. For another example, the electronic device 101 may perform only the operation 903 and the operation 905, and may not perform the operation 901.

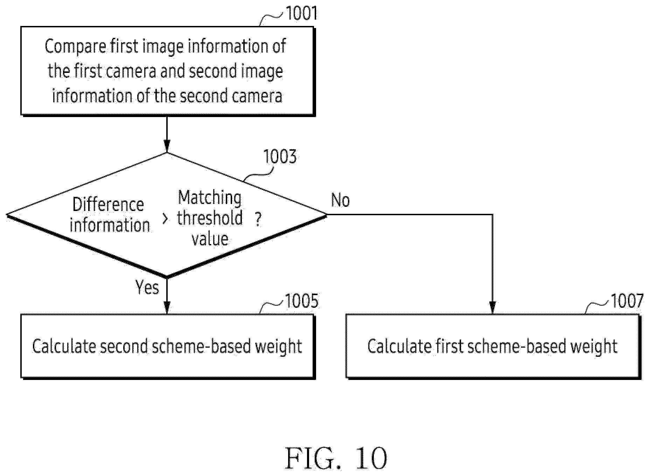

In FIGS. 4A to 9, described is an example of determining a depth map calculation scheme based on an indirect condition in which a difference between the obtained images is expected to be high, rather than a direct comparison between the obtained images. The electronic device may determine a depth map calculation scheme, based on a low illumination environment, a proximity environment, or an unusual type of object that is expected to have a high deviation between cameras. However, embodiments of the disclosure are not limited thereto. The electronic device 101 may identify whether matching is possible to calculate the depth map without errors, by comparing images actually obtained. Hereinafter, in FIG. 10, described are operations of the electronic device for determining a depth map calculation scheme through comparison between the actually obtained images.

FIG. 10 illustrates an example operation flow of an electronic device for determining a depth map calculation scheme based on a difference in image information between cameras, according to an embodiment. The operation of the electronic device (e.g., the electronic device 101) may be performed by a processor (e.g., the processor 201).

Referring to FIG. 10, in operation 1001, the electronic device 101 may compare first image information of the first camera and second image information of the second camera. The electronic device 101 may capture a frame through the first camera. The electronic device 101 may obtain the first image information on the frame through the first camera. The electronic device 101 may capture a frame through the second camera. The electronic device 101 may obtain the second image information on the frame through the second camera. The electronic device 101 may obtain a difference between two image information to calculate a depth map according to the first scheme. The electronic device 101 may compare the first image information and the second image information to obtain the difference between the two image information.

In operation 1003, the electronic device 101 may identify whether the difference information is greater than a matching threshold value. The electronic device 101 may obtain difference information based on a result of comparing the first image information and the second image information. Here, a parameter to be compared may be related to the quality of the image. For example, the image information may include an exposure value. For example, the exposure value (e.g., -EV) of the first image information may be related to a type of the first camera (e.g., a telephoto camera). For example, the exposure value (e.g., 0 EV) of the second image information may be related to a type of the second camera (e.g., a wide-angle camera). According to a difference in exposure values, a depth map based on combining the first image information and the second image information may include erroneous information. Further, for example, the image information may include a focal length. For example, the focal length (e.g., about 10cm) of the first image information may be related to the type of the first camera (e.g., a wide-angle camera). The focal length (e.g., about 3cm) of the second image information may be related to a type of the second camera (e.g., an ultra-wide-angle camera). According to the difference in optical characteristics, a peripheral image of the wide-angle camera may be blurred at a close distance, so the depth map based on combining the first image information and the second image information may include misinformation.

The electronic device 101 may perform operation 1005 when the difference information is greater than the matching threshold value. The electronic device 101 may perform operation 1007 when the difference information is not greater than the matching threshold value.

In operation 1005, the electronic device 101 may perform a second scheme-based weight calculation. Here, the second scheme-based weight calculation refers to an operation of setting a second weight to be applied to the second depth map according to the second scheme to be higher than a first weight to be applied to the first depth map according to the first scheme. The higher the similarity between the first image information and the second image information, the less likely it is that the depth calculated for each pixel is to be distorted by a combination of the first image information and the second image information. For example, when a difference between image information obtained through the two cameras is greater than the matching threshold value, the electronic device 101 may determine that there is high likely that errors occur in the depth map according to the first scheme. The electronic device 101 may determine the second scheme as a depth map calculation scheme, or may determine a third scheme, in which the second weight for the second scheme is set to be higher than the first weight for the first scheme, as a depth map calculation scheme

In operation 1007, the electronic device 101 may perform a first scheme-based weight calculation. Here, the first scheme-based weight calculation refers to an operation of setting the first weight to be applied to the first depth map according to the first scheme to be higher than the second weight to be applied to the second depth map according to the second scheme. Since the difference between the first image information and the second image information is relatively small, the electronic device 101 may determine that the reliability of depth information calculated based on the combination of the first image information and the second image information is relatively high. Accordingly, the electronic device 101 may obtain a stable depth map by means of the combination of the first image information and the second image information. The electronic device 101 may use the first scheme. The electronic device 101 may determine the first scheme as a depth map calculation scheme, or may determine the third scheme, in which the first weight for the first scheme is set to be higher than the second weight for the second scheme, as a depth map calculation scheme.

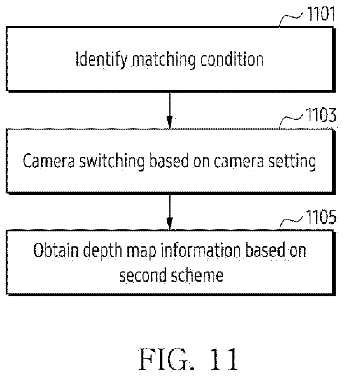

FIG. 11 illustrates an example operation flow of an electronic device for obtaining a depth map through camera switching, according to an embodiment. In FIG. 11, a situation where the current main camera and a sub-camera are set and the depth map calculation scheme is determined as the second scheme, for example, an AI learning scheme of a single camera will be described.

Referring to FIG. 11, the electronic device (e.g., the electronic device 101) may identify a matching condition. The electronic device 101 may identify a matching condition used to determine as the second scheme. If the matching condition is not satisfied, the electronic device 101 may determine a depth map calculation scheme as the second scheme. According to an embodiment, the electronic device 101 may identify a condition that requires a brightness value to be less than a threshold value, for example, a condition indicating a low illuminance. Further, according to an embodiment, the electronic device 101 may identify a condition that requires a distance to an object to be shorter than a reference value, for example, a condition indicating a super-close distance.

In operation 1103, the electronic device 101 may perform camera switching based on the camera setting. The electronic device 101 may identify the camera setting corresponding to the matching condition. The camera setting corresponding to the matching condition may refer to a camera setting indicative of the best performance in an environment where the matching condition is not satisfied. The camera setting may include a camera type to be activated. For example, the electronic device 101 may identify a main camera currently set. In such a case, when the performance of the main camera is less than that of the sub-camera, the electronic device 101 may perform camera switching. Although not shown in FIG. 11, according to an additional embodiment, the electronic device 101 may display a user interface (UI) for guiding the camera switching through a display.

According to an embodiment, the main camera may be a wide-angle camera, and the sub-camera may be an ultra-wide-angle camera. At a super-close distance (e.g., a distance to an object is less than a reference value), the sub-camera may have higher quality than the wide-angle camera. Here, a term 'high quality' may imply that the object is in focus, while a term 'low quality' may imply that defocusing occurs or a peripheral image is blurred due to the characteristics of the lens (such as e.g., depth or distortion). The electronic device 101 may change the main camera from a wide-angle camera to an ultra-wide-angle camera. Meanwhile, when the sub-camera is not an ultra-wide-angle camera or no sub-camera is set, the electronic device 101 may activate the sub-camera.

According to an embodiment, the main camera may be a telephoto camera and the sub-camera may be a wide-angle camera. Under an ultra-low illumination environment (e.g., where the brightness value is less than the threshold value), the quality of the wide-angle camera may be higher than that of the telephoto camera. Since **f** value (e.g., f/number) of the telephoto camera is often greater than that of the wide-angle camera, it may not be exposed to sufficient light, while the wide-angle camera may be sufficiently exposed to sufficient light even in low illumination. The f value is a value obtained by dividing the focal length by the diameter through which light passes, indicating the amount of light. The image obtained with the wide-angle camera may be sharper than the image obtained with the telephoto camera. The electronic device 101 may change the main camera from a telephoto camera to an ultra-wide-angle camera.

In operation 1105, the electronic device 101 may obtain depth map information based on the second scheme. The electronic device 101 may obtain depth map information based on an AI technique of the changed main camera. Although not shown in FIG. 11, after obtaining the depth map, the electronic device 101 may separate the background area and the foreground area of the image and perform effect processing (e.g., single Bokeh processing) designated for the background area.

The determination of the depth map calculation scheme according to the embodiments of the disclosure may be performed before calculating the depth map using the camera, thereby increasing the calculation speed and accuracy. The electronic device according to the embodiments may determine the matching condition for the first scheme before calculating the depth map according to the first scheme, thereby reducing errors that may occur upon providing the foreground and background split and the background blurring effects using two or more cameras. Further, by complementarily applying the second scheme using the AI technique of a single camera and the first scheme using multiple cameras, the electronic device can output an image with a depth map having excellent performance regardless of conditions such as distance or illuminance.

In embodiments, an electronic device may include at least one sensor, a plurality of cameras, a display, memory configured to store instructions, and at least one processor operatively coupled to the at least one sensor, the plurality of cameras, the display, and the memory. The at least one processor may perform designated operations according to execution of the instructions. The at least one processor may be configured to obtain first image information on a frame, using a first camera among the plurality of cameras. The at least one processor may be configured to obtain second image information on the frame, using a second camera among the plurality of cameras. The at least one processor may be configured to determine a depth map calculation scheme, based on at least one matching condition, related to at least one of a difference between the first image information and the second image information, a brightness value of the frame, or an object detected from the frame. The at least one processor may be configured to obtain depth map information, based on at least one camera identified according to the depth map calculation scheme. The at least one processor may be configured to display an image in which a designated processing is applied to a background area based on the depth map information, through the display. In the at least one processor, the depth map calculation scheme may be determined based at least in part on a first scheme for determining a depth map through the plurality of cameras and a second scheme for determining the depth map through a single camera among the plurality of cameras.

According to an embodiment, the at least one processor may be configured to obtain the brightness value through an illuminance sensor to determine the depth map calculation scheme. The at least one processor may be configured to identify the first scheme as the depth map calculation scheme, when the obtained brightness value is greater than or equal to a threshold value, in order to determine the depth map calculation scheme. The at least one processor may be configured to identify the second scheme as the depth map calculation scheme, when the obtained brightness value is less than the threshold value.

According to an embodiment, the at least one processor may be configured to obtain a distance value from the object through a distance detection sensor in order to determine the depth map calculation scheme. The at least one processor may be configured to identify the second scheme as the depth map calculation scheme, when the obtained distance value is less than a reference value, in order to determine the depth map calculation scheme. The at least one processor may be configured to identify the first scheme as the depth map calculation scheme, when the obtained distance value is greater than or equal to the reference value, in order to determine the depth map calculation scheme.

According to an embodiment, the at least one processor may be configured to detect the object in the frame through an object detection algorithm in order to determine the depth map calculation scheme. The at least one processor may be configured to identify whether the detected object corresponds to a designated type in order to determine the depth map calculation scheme. The at least one processor may be configured to determine a scheme of applying a first weight to the first scheme and applying a second weight greater than the first weight to the second scheme, when the detected object corresponds to the designated type, in order to determine the depth map calculation scheme.

According to an embodiment, the designated type may be an object having a repetition pattern, or an object being a texture-less or including transparent material.

According to an embodiment, the at least one processor may be configured to, for one area among a plurality of areas of the frame, apply a first weight corresponding to the one area to first depth map information obtained through the first scheme, in order to obtain the depth map information. The at least one processor may be configured to apply a second weight corresponding to the one area to second depth map information obtained through the second scheme, in order to obtain the depth map information. The at least one processor may be configured to obtain the depth map information, based on the first depth map information to which the first weight is applied and the second depth map information to which the second weight is applied, in order to obtain the depth map information.

According to an embodiment, the at least one processor may be configured to identify a saturation area of a high dynamic range (HDR) within the frame in order to determine the depth map calculation scheme. The at least one processor may be configured to determine a depth map calculation scheme for the saturation area as the second scheme in order to determine the depth map calculation scheme.

According to an embodiment, the at least one processor may be configured to identify a moving area within the frame based on a first frame photographed through a first exposure value and a second frame photographed through a second exposure value different from the first exposure value, in order to determine the depth map calculation scheme. The at least one processor may be configured to determine a depth map calculation scheme for the moving area as the second scheme, in order to determine the depth map calculation scheme.

According to an embodiment, the at least one processor may be configured to identify an area corresponding to the object within the frame in order to determine the depth map calculation scheme. The at least one processor may be configured to determine a depth map calculation scheme for the identified area as the second scheme in order to determine the depth map calculation scheme.

According to an embodiment, the at least one processor may be configured to identify a background area and a foreground area in the frame to display the image. The at least one processor may be configured to apply a Bokeh effect to the background area to display the image. The at least one processor may be configured to obtain the image by combining the background area to which the Bokeh effect is applied and the foreground area, in order to display the image. The at least one processor may be configured to display the obtained image through the display, in order to display the image.

In embodiments, a method performed by an electronic device may include obtaining first image information for a frame, using a first camera among a plurality of cameras. The method may include obtaining second image information for the frame, using a second camera among the plurality of cameras. The method may include determining a depth map calculation scheme, based on at least one matching condition, related to at least one of a difference between the first image information and the second image information, a brightness value of the frame, or an object detected from the frame. The method may include obtaining depth map information for the frame, based on at least one camera identified according to the depth map calculation scheme. The method may include displaying, through a display, an image in which designated processing is applied to a background area based on the depth map information. The depth map calculation scheme may be determined based at least in part on a first scheme for determining a depth map through the plurality of cameras and a second scheme for determining the depth map through a single camera among the plurality of cameras.

According to an embodiment, the determining the depth map calculation scheme may include obtaining the brightness value through an illuminance sensor. The determining the depth map calculation scheme may include identifying the first scheme as the depth map calculation scheme, when the obtained brightness value is greater than or equal to a threshold value. The determining the depth map calculation scheme may include identifying the second scheme as the depth map calculation scheme, when the obtained brightness value is less than the threshold value.

According to an embodiment, the determining the depth map calculation scheme may include obtaining a distance value from the object through a distance detection sensor. The determining the depth map calculation scheme may include identifying the second scheme as the depth map calculation scheme, when the obtained distance value is less than a reference value. The determining the depth map calculation scheme may include identifying the first scheme as the depth map calculation scheme, when the obtained distance value is greater than or equal to the reference value.

According to an embodiment, the determining the depth map calculation scheme may include detecting the object in the frame through an object detection algorithm. The determining the depth map calculation scheme may include identifying whether the detected object corresponds to a designated type. The determining the depth map calculation scheme may include determining a scheme of applying a first weight to the first scheme and applying a second weight greater than the first weight to the second scheme, when the detected object corresponds to the designated type.

According to an embodiment, the designated type may be an object having a repetition pattern, or an object being a texture-less or including transparent material.

According to an embodiment, the determining the depth map calculation scheme may include, for one area among a plurality of areas of the frame, apply a first weight corresponding to the one area to first depth map information obtained through the first scheme. The determining the depth map calculation scheme may include applying a second weight corresponding to the one area to second depth map information obtained through the second scheme. The determining the depth map calculation scheme may include obtaining the depth map information, based on the first depth map information to which the first weight is applied and the second depth map information to which the second weight is applied.

According to an embodiment, the determining the depth map calculation scheme may include identifying a saturation area of a high dynamic range (HDR) in the frame. The determining the depth map calculation scheme may include determining a depth map calculation scheme for the saturation area as the second scheme.

According to an embodiment, the determining the depth map calculation scheme may include identifying a moving area in the frame based on a first frame photographed through a first exposure value and a second frame photographed through a second exposure value different from the first exposure value. The determining the depth map calculation scheme may include determining a depth map calculation scheme for the moving area as the second scheme.

According to an embodiment, the determining the depth map calculation scheme may include identifying an area corresponding to the object within the frame. The determining the depth map calculation scheme may include determining the depth map calculation scheme for the identified area as the second scheme.

According to an embodiment, the displaying the image may include identifying a background area and a foreground area in the frame. The displaying the image may include applying Bokeh effect to the background area. The displaying the image may include obtaining the image by combining the background area to which the Bokeh effect is applied and the foreground area. The displaying the image may include displaying the obtained image through the display.

In embodiments, an electronic device may include at least one sensor, a plurality of cameras, a display, memory configured to store instructions, and at least one processor operatively coupled to the at least one sensor, the plurality of cameras, the display, and the memory. The at least one processor may perform designated operations according to execution of the instructions. The at least one processor may be configured to, when a brightness value detected by the at least one sensor is less than a threshold value or a distance value to an object detected by the at least one sensor is less than a reference value, identify, from among a first scheme for determining a depth map through the plurality of cameras and a second scheme for determining the depth map through a single camera among the plurality of cameras, the second scheme. The at least one processor may be configured to identify the single camera among the plurality of cameras, based on either the brightness value or the distance value. The at least one processor may be configured to obtain image information through the single camera. The at least one processor may be configured to obtain depth map information through the single camera. The at least one processor may be configured to display an image in which a designated processing is applied to a background area based on the image information and the depth map information, through the display.

In embodiments, a method performed by an electronic device may include, when a brightness value detected by at least one sensor is less than a threshold value or a distance value to an object detected by the at least one sensor is less than a reference value, identifying, from among a first scheme for determining a depth map through the plurality of cameras and a second scheme for determining the depth map through a single camera among the plurality of cameras, the second scheme. The method may include identifying the single camera among the plurality of cameras, based on either the brightness value or the distance value. The method may include obtaining image information through the single camera. The method may include obtaining depth map information through the single camera. The method may include displaying an image in which a designated processing is applied to a background area based on the image information and the depth map information, through a display.

In embodiments, an electronic device may include at least one sensor, a plurality of cameras, a display, memory configured to store instructions, and at least one processor operatively coupled to the at least one sensor, the plurality of cameras, the display, and the memory. The at least one processor may, according to execution of the instructions, cause the electronic device to obtain first image information on a frame using a first camera among the plurality of cameras, obtain second image information on the frame using a second camera among the plurality of cameras, determine a depth map calculation scheme based on at least one matching condition, related to at least one of a difference between the first image information and the second image information, a brightness value of the frame, or an object detected from the frame, obtain depth map information based on at least one camera identified according to the depth map calculation scheme, and display, through the display, an image to which a designated processing is applied to a background area based on the depth map information.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment, the electronic devices are not limited to those described above.

It should be appreciated that various embodiments and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, 'logic', 'logic block', 'part', 'portion', or 'circuit'. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The methods according to various embodiments described in the claims and/or specification of the disclosure may be implemented in hardware, software, or a combination of hardware and software.

In case of implementation as software, a computer-readable storage medium for storing one or more programs (software modules) may be provided. The one or more programs stored in the computer-readable storage medium are configured for execution by one or more processors in an electronic device. The one or more programs include instructions that cause the electronic device to execute the methods according to embodiments described in the claims or specifications of the disclosure.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs), other type of optical storage device, or a magnetic cassette. Alternatively, the program may be stored in a memory composed of a combination of some or all of those. In addition, a plurality of respective constituent memories may be included therein.

Further, the program may be stored in an attachable storage device that may be accessed through a communication network such as e.g., Internet, Intranet, local area network (LAN), wide area network (WAN), or storage area network (SAN), or a combination thereof. Such a storage device may be connected to a device performing an embodiment of the disclosure via an external port. In addition, a separate storage device on the communication network may also access a device performing an embodiment of the disclosure.

In the above-described specific embodiments of the disclosure, an element included in the disclosure is expressed in a singular or plural form depending on a presented specific embodiment. However, the singular form or plural form is selected to better suit its presented situation for the convenience of description, and the disclosure is not limited to that singular element or the plural element presented, and even a component expressed in plural may be configured in a singular form, or even a component expressed in singular may be configured in a plural form.

While the disclosure has been shown and described with reference to specific embodiments thereof, it will be apparent that various changes and modifications are possible without departing form the scope of the disclosure.

## Claims

1. An electronic device comprising:
at least one sensor;
a plurality of cameras;
a display;
memory configured to store instructions; and
at least one processor operatively coupled to the at least one sensor, the plurality of cameras, the display, and the memory;
wherein, when the instructions are executed, the at least one processor is configured to:
obtain first image information on a frame, using a first camera among the plurality of cameras;
obtain second image information on the frame, using a second camera among the plurality of cameras;
determine a depth map calculation scheme, based on at least one matching condition, related to at least one of a difference between the first image information and the second image information, a brightness value of the frame, or an object detected from the frame;
obtain depth map information, based on at least one camera identified according to the depth map calculation scheme; and
display, through the display, an image in which a designated processing is applied to a background area based on the depth map information; and
wherein the depth map calculation scheme is determined based at least in part on a first scheme for determining a depth map through the plurality of cameras and a second scheme for determining the depth map through a single camera among the plurality of cameras.

2. The electronic device of claim 1, wherein to determine the depth map calculation scheme, the at least one processor is configured to:
obtain the brightness value through an illuminance sensor;
identify the first scheme as the depth map calculation scheme, when the obtained brightness value is greater than or equal to a threshold value; and
identify the second scheme as the depth map calculation scheme, when the obtained brightness value is less than the threshold value.

3. The electronic device of claim 1, wherein to determine the depth map calculation scheme, the at least one processor is configured to:
obtain a distance value from the object through a distance detection sensor;
identify the second scheme as the depth map calculation scheme, when the obtained distance value is less than a reference value; and
identify the first scheme as the depth map calculation scheme, when the obtained distance value is greater than or equal to the reference value.

4. The electronic device of claim 1, wherein to determine the depth map calculation scheme, the at least one processor is configured to:
detect the object in the frame through an object detection algorithm;
identify whether the detected object corresponds to a designated type; and
determine a scheme of applying a first weight to the first scheme and applying a second weight greater than the first weight to the second scheme, when the detected object corresponds to the designated type.

5. The electronic device of claim 4, wherein the designated type include an object having a repetition pattern, or an object being texture-less or including transparent material.

6. The electronic device of claim 1, wherein to determine the depth map calculation scheme, the at least one processor is configured to:
for one area among a plurality of areas of the frame, apply a first weight corresponding to the one area to first depth map information obtained through the first scheme;
apply a second weight corresponding to the one area to second depth map information obtained through the second scheme; and
obtain the depth map information, based on the first depth map information to which the first weight is applied and the second depth map information to which the second weight is applied.

7. The electronic device of claim 1, wherein to determine the depth map calculation scheme, the at least one processor is configured to:
identify a saturation area of a high dynamic range (HDR) in the frame; and
determine a depth map calculation scheme for the saturation area as the second scheme.

8. The electronic device of claim 1, wherein to determine the depth map calculation scheme, the at least one processor is configured to:
identify a moving area in the frame, based on a first frame photographed through a first exposure value and a second frame photographed through a second exposure value different from the first exposure value; and
determine a depth map calculation scheme for the moving area as the second scheme.

9. The electronic device of claim 1, wherein to determine the depth map calculation scheme, the at least one processor is configured to:
identify an area corresponding to the object in the frame; and
determine a depth map calculation scheme for the identified area as the second scheme.

10. The electronic device of claim 1, wherein in order to display the image, the at least one processor is configured to:
identify a background area and a foreground area in the frame;
apply Bokeh effect to the background area;
obtain the image by combining the background area to which the Bokeh effect is applied and the foreground area; and
display the obtained image through the display.

11. A method performed by an electronic device, comprising:
obtaining first image information for a frame, using a first camera among a plurality of cameras;
obtaining second image information for the frame, using a second camera among the plurality of cameras;
determining a depth map calculation scheme, based on at least one matching condition, related to at least one of a difference between the first image information and the second image information, a brightness value of the frame, or an object detected from the frame;
obtaining depth map information for the frame, based on at least one camera identified according to the depth map calculation scheme; and
displaying, through a display, an image in which a designated processing is applied to a background area based on the depth map information;
wherein the depth map calculation scheme is determined based at least in part on a first scheme for determining a depth map through the plurality of cameras and a second scheme for determining the depth map through a single camera among the plurality of cameras.

12. The method of claim 11, wherein the determining the depth map calculation scheme comprises:
obtaining the brightness value through an illuminance sensor;
identifying the first scheme as the depth map calculation scheme, when the obtained brightness value is greater than or equal to a threshold value; and
identifying the second scheme as the depth map calculation scheme, when the obtained brightness value is less than the threshold value.

13. The method of claim 11, wherein the determining the depth map calculation scheme comprises:
obtaining a distance value from the object through a distance detection sensor;
identifying the second scheme as the depth map calculation scheme, when the obtained distance value is less than a reference value; and
identifying the first scheme as the depth map calculation scheme, when the obtained distance value is greater than or equal to the reference value.

14. The method of claim 11, wherein the determining the depth map calculation scheme comprises:
detecting the object in the frame through an object detection algorithm;
identifying whether the detected object corresponds to a designated type;
determining a scheme of applying a first weight to the first scheme and applying a second weight greater than the first weight to the second scheme, when the detected object corresponds to the designated type.

15. An electronic device comprising:
at least one sensor;
a plurality of cameras;
a display;
memory configured to store instructions; and
at least one processor operatively coupled to the at least one sensor, the plurality of cameras, the display, and the memory;
wherein, when the instructions are executed, the at least one processor is configured to:
when a brightness value detected by the at least one sensor is less than a threshold value or a distance value to an object detected by the at least one sensor is less than a reference value, identify, from among a first scheme for determining a depth map through the plurality of cameras and a second scheme for determining the depth map through a single camera among the plurality of cameras, the second scheme;
identify the single camera among the plurality of cameras, based on either the brightness value or the distance value;
obtain image information through the single camera;
obtain depth map information through the single camera; and
display an image in which a designated processing is applied to a background area based on the image information and the depth map information, through the display.
